(19) Europäisches Patentamt
European Patent Office
Office européen des brevets

(11) **EP 3 880 455 B1**

(12) **FASCICULE DE BREVET EUROPEEN**

(45) Date de publication et mention
de la délivrance du brevet:
**04.01.2023 Bulletin 2023/01**

(21) Numéro de dépôt: **19835688.3**

(22) Date de dépôt: **15.11.2019**

(51) Classification Internationale des Brevets (IPC):
**B29D 30/46** (2006.01)  **B26D 1/28** (2006.01)
**B26D 1/26** (2006.01)  **B26D 3/00** (2006.01)
**B26D 1/153** (2006.01)

(52) Classification Coopérative des Brevets (CPC):
**B29D 30/46; B26D 1/265; B26D 1/285; B26D 3/003**

(86) Numéro de dépôt international:
**PCT/FR2019/052723**

(87) Numéro de publication internationale:
**WO 2020/099804 (22.05.2020 Gazette 2020/21)**

(54) **SYSTÈME DE COUPE DE BANDELETTES PAR COUTEAUX HÉLICOIDAUX ET PROCÉDÉ DE COUPE CORRESPONDANT**

SYSTEM ZUM SCHNEIDEN VON BÄNDERN MITTELS SCHRAUBENFÖRMIGER MESSER UND ENTSPRECHENDES SCHNEIDVERFAHREN

SYSTEM FOR CUTTING STRIPS USING HELICAL KNIVES AND CORRESPONDING CUTTING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2018 FR 1860646**

(43) Date de publication de la demande:
**22.09.2021 Bulletin 2021/38**

(73) Titulaire: **COMPAGNIE GENERALE DES ETABLISSEMENTS MICHELIN**
**63000 Clermont-Ferrand (FR)**

(72) Inventeurs:
• **PIALOT, Frédéric**
**63040 CLERMONT-FERRAND CEDEX 9 (FR)**
• **BESSAC, Christophe**
**63040 CLERMONT-FERRAND CEDEX 9 (FR)**
• **DUBOIS, Clément**
**63040 CLERMONT-FERRAND CEDEX 9 (FR)**
• **FUCHS, Olivier**
**63040 CLERMONT-FERRAND CEDEX 9 (FR)**

(74) Mandataire: **Redouté, Gilles Pierre**
**M. F. P. Michelin**
**Service juridique - Propriété Intellectuelle**
**DCJ/PI - F35 - Site de Ladoux**
**23, place des Carmes-Déchaux**
**63040 Clermont-Ferrand Cedex 9 (FR)**

(56) Documents cités:
**GB-A- 2 190 029  US-A- 3 183 751**

EP 3 880 455 B1

**Description**

La présente invention concerne le domaine de la préparation de bandelettes par découpe d'une bande initialement continue, et plus particulièrement l'application de bandelettes ainsi préparées à la confection de nappes de renfort pour bandages, notamment pour bandages pneumatiques.

On connaît déjà de nombreux systèmes de confection de nappes de renfort, au sein desquels les bandelettes sont coupées puis posées successivement bord à bord sur un support d'assemblage, tel qu'un tapis ou un tambour, de sorte que la série des bandelettes juxtaposées par leurs lisières forme la nappe de renfort souhaitée.

La coupe à longueur des bandelettes est généralement réalisée au moyen d'une coupeuse possédant une lame rectiligne de type guillotine, qui vient sectionner la bande continue sur toute sa largeur.

De telles coupeuses peuvent toutefois s'avérer relativement encombrantes, du fait que la lame doit couvrir toute la largeur de la bande continue, et ce y compris pour la réalisation de coupes en biseau.

En outre, la mise en œuvre d'une telle coupeuse nécessite de stopper l'avance de la bande continue, à chaque coupe, afin d'éviter qu'un effort de traction exercé sur la bandelette pendant que ladite bandelette est encore partiellement rattachée à la bande continue ne déforme ladite bandelette. De ce fait, la cadence de production de la coupeuse peut être relativement limitée.

En outre, de telles coupeuses requièrent généralement des efforts de coupe relativement élevés, fortement consommateurs d'énergie.

Enfin, tant pour des raisons d'encombrement que de faisabilité mécanique, les plages d'angle de coupe accessibles à de telles coupeuses peuvent être relativement restreintes.

Les objets assignés à l'invention visent par conséquent à remédier aux inconvénients susmentionnés et à proposer un système de coupe qui permette de réaliser des coupes nettes et précises à une cadence élevée, avec une faible dépense d'énergie, et qui soit polyvalent en ceci qu'il offre une large variété de choix de l'angle de coupe, et une reconfiguration facile pour passer d'un angle de coupe à l'autre.

Le document de brevet US 3,183,751 A divulgue un système de coupe ayant les caractéristiques du préambule de la revendication indépendante 1.

Les objets assignés à l'invention sont atteints au moyen d'un système de coupe destiné à couper une bande dite « bande continue » qui s'étend en longueur selon une direction dite « direction longitudinale » et en largeur entre une première lisière et une seconde lisière, ledit système de coupe étant caractérisé en ce qu'il comprend :

- un dispositif d'entraînement agencé pour entraîner la bande continue le long d'un chemin de bande selon une vitesse dite « vitesse d'avance » qui est orientée selon la direction longitudinale de ladite bande continue,
- un premier rouleau de coupe, qui est monté de sorte à pouvoir être entraîné dans un premier mouvement de rotation, selon une vitesse de rotation choisie, autour d'un premier axe de rotation orienté transversalement au chemin de bande, de préférence perpendiculairement audit chemin de bande, ledit premier rouleau de coupe étant pourvu d'une première lame hélicoïdale qui s'étend en hélice autour dudit premier axe de rotation,
- un second rouleau de coupe, qui est monté en rotation autour d'un second axe de rotation, de préférence parallèle au premier axe de rotation, selon un second mouvement de rotation de sens contraire au mouvement de rotation du premier rouleau de coupe, et qui est agencé de sorte à pouvoir, lorsque la bande continue est engagée entre lesdits premier et second rouleaux de coupe coopérer avec la première lame hélicoïdale pour couper ladite bande continue sur toute la largeur de ladite bande continue, depuis la première lisière jusqu'à la seconde lisière,
- un synchroniseur variable, qui permet de sélectionner et de modifier le rapport, dit « rapport de synchronisation », entre la vitesse de rotation du premier rouleau de coupe et la vitesse d'avance de la bande continue, de manière à pouvoir ajuster l'angle dit « angle de coupe » selon lequel on oriente la coupe de la bande continue par rapport à la direction longitudinale de ladite bande continue.

Avantageusement, l'utilisation de rouleaux de coupe contrarotatifs permet de réaliser une coupe sur toute la largeur de la bande continue au moyen d'organes coupants hélicoïdaux compacts, dont la longueur axiale excède à peine la largeur frontale de la bande continue.

En outre, l'utilisation de tels rouleaux de coupe pourvus d'une lame hélicoïdale permet d'exercer une pression de coupe sur une zone quasi-ponctuelle de la bande continue, zone qui se déplace sur la largeur de la bande continue au fur et à mesure de la rotation des rouleaux. De ce fait, il est possible d'exercer sur la bande continue une contrainte de cisaillement très élevée, et donc d'obtenir facilement une coupe nette, avec un moindre effort d'actionnement des rouleaux de coupe.

Ensuite, et surtout, l'invention permet, grâce au synchroniseur variable, de choisir très librement l'angle de coupe selon lequel on oriente le tracé de coupe de la bandelette par rapport à la direction longitudinale de ladite bandelette, puisque ledit angle de coupe est défini, dans le plan de la bandelette, et à chaque instant considéré, par l'orientation d'un vecteur de vitesse de coupe qui résulte de la somme vectorielle de deux composantes, à savoir la vitesse d'avance, portée par la direction longitudinale, et la vitesse de coupe, portée par une direction transverse à ladite direction longitudinale, de préférence perpendiculaire à ladite direction longitudinale, composantes que l'on peut définir et contrôler indépendamment l'une de l'autre en faisant varier le rapport de synchronisation.

Plus avantageux encore, il est possible de modifier dynamiquement le rapport de synchronisation, et donc l'angle de coupe, au cours d'une même opération de coupe, entre la première lisière et la seconde lisière de la bande continue, et ainsi d'adapter à chaque instant les conditions de coupe pour conférer de manière très précise au tracé de coupe une forme prédéterminée, quelle que soit cette forme prédéterminée.

Comme on le verra par la suite, un tel ajustement du rapport de synchronisation peut notamment permettre d'obtenir un profil de coupe concave, rectiligne, ou convexe, et/ou de compenser les effets de déformation des bords de la bande continue, pour obtenir un tracé de coupe parfaitement conforme au tracé géométrique idéal souhaité.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue de côté, un exemple d'une paire de rouleaux de coupe contrarotatifs conformes à l'invention.

La figure 2 illustre, selon une vue en perspective, les rouleaux de coupe de la figure 1.

La figure 3 illustre, selon une vue en perspective, l'application des rouleaux de coupe des figures 1 et 2 à une opération de coupe à la volée d'une bande continue.

Les figures 4, 5 et 6 illustrent, selon des vues en perspective, diverses formes d'organes coupants, comprenant notamment des lames hélicoïdales, et plus globalement illustrent divers exemples de paires de rouleaux de coupe conjugués, utilisables par un système de coupe selon l'invention.

La figure 7 illustre, selon une vue de côté, une paire de rouleaux de coupe exerçant une action de coupe sur une bande continue.

La figure 8 illustre, selon une vue de côté, les rouleaux de coupe de la figure 7 dans une configuration dans laquelle lesdits rouleaux laissent passer la bande continue sans exercer d'action de coupe sur cette dernière.

La figure 9 illustre, selon une vue schématique du dessus, le principe de réglage de l'angle de coupe par la sélection d'un rapport de synchronisation approprié entre la vitesse relative de coupe, qui résulte de la vitesse de rotation du premier rouleau de coupe, et la vitesse d'avance de la bande continue.

La figure 10 illustre un exemple de loi de synchronisation selon l'invention, comprenant ici trois paliers successifs permettant d'appliquer successivement, au cours d'une même coupe en largeur, plusieurs rapports de synchronisation différents, ici qui vont décroissants en valeur absolue, par exemple pour compenser les effets de déformation que l'on observe au niveau des lisières de la bande continue sous les efforts de coupe.

La figure 11 illustre, selon une vue schématique de dessus, une représentation des angles de coupe théoriques correspondant aux rapports de synchronisation définis par la loi de synchronisation de la figure 10, ainsi qu'une représentation du tracé de coupe effectivement obtenu en appliquant cette série de rapports de synchronisation à une bande continue dont les lisières sont sujettes à des phénomènes de déformation.

Les figures 12 et 13 illustrent, respectivement selon une vue en perspective et une vue de côté, un exemple de second rouleau de coupe comportant une surface d'appui lisse et une rainure hélicoïdale, dans laquelle pénètre la lame hélicoïdale.

La figure 14 illustre, selon une vue en perspective, un exemple de second rouleau de coupe comportant une rainure hélicoïdale et, cette fois, une surface striée comprenant une pluralité de gorges annulaires destinées à améliorer le maintien latéral de la bande continue, notamment lorsque ladite bande continue contient des fils de renforts parallèles à ses lisières.

La figure 15 illustre, selon une vue partielle en perspective, une paire de rouleaux de coupe comprenant un second rouleau de coupe selon la figure 14 coopérant avec un premier rouleau de coupe dont la lame hélicoïdale est striée afin d'améliorer le maintien latéral de la bande continue pendant la coupe.

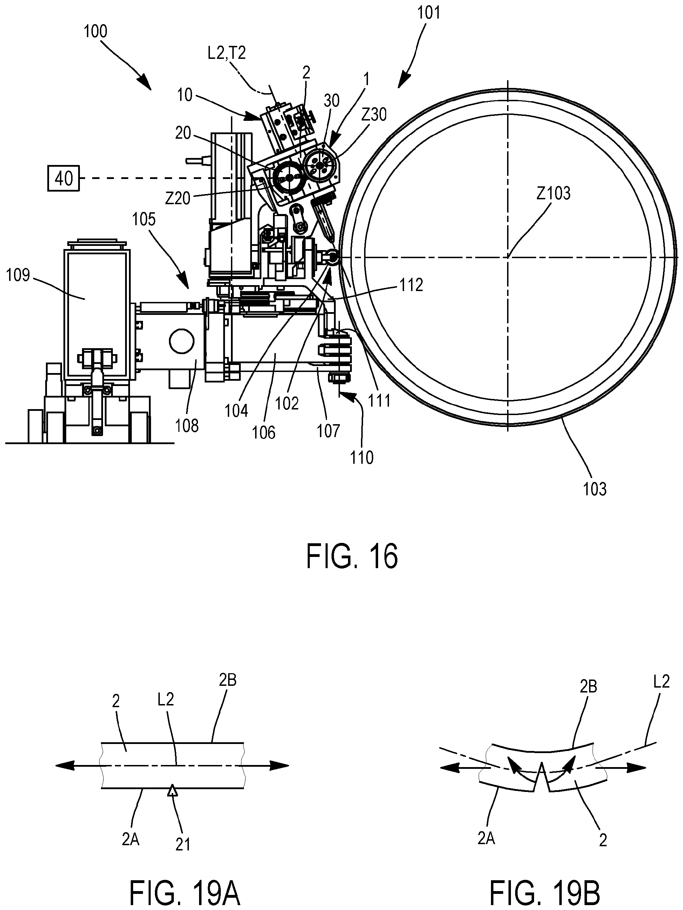

La figure 16 illustre, selon une vue de côté, un exemple d'installation de fabrication de nappes de renfort utilisant un robot, de type robot parallèle, c'est-à-dire qui comprend un mécanisme en chaîne cinématique fermée dont l'organe terminal est relié à une base par plusieurs chaînes cinématiques indépendantes ou « bras », et plus spécifiquement un robot de type cartésien, c'est-à-dire qui suit un système de coordonnées cartésiennes, ledit robot étant ici pourvu d'une tête de pose alimentée en bandelettes via un système de coupe selon l'invention, et agencé pour déposer et abouter successivement lesdites bandelettes sur un support d'assemblage, tel qu'un tambour cylindrique, un noyau torique ou toute autre surface gauche.

La figure 17 illustre, selon une vue en perspective, un autre exemple d'installation de fabrication de nappes de renfort utilisant cette fois un bras robotisé anthropomorphe, par exemple un bras robotisé à six axes, dont l'organe terminal formant un poignet est cette fois relié à la base par une chaîne cinématique unique, et dont ledit poignet embarque une tête de pose associée à un système de coupe selon l'invention.

La figure 18 est une vue de détail en perspective d'une partie du robot de la figure 17.

Les figures 19A et 19B illustrent, selon des vues schématiques de dessus, le principe d'une déformation de la bande continue liée à l'affaiblissement de la section transverse de ladite bande continue pendant l'opération de coupe.

La présente invention concerne un système de coupe 1 destiné à couper une bande 2 dite « bande continue » 2.

Ladite bande continue 2 s'étend en longueur selon une direction dite « direction longitudinale » L2 et en largeur W2 entre une première lisière 2A et une seconde lisière 2B.

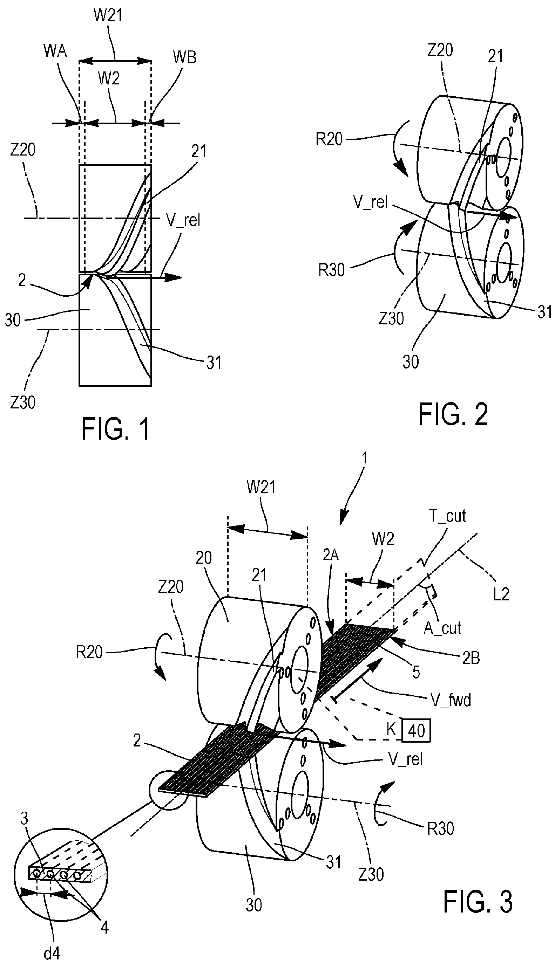

De préférence, tel que cela est visible sur la figure 3, ladite bande continue 2 constituera une « nappe droit fil », qui est formée d'au moins une couche de gomme 3 renforcée par une pluralité de fils de renforts 4 continus, de préférence métalliques, qui s'étendent parallèlement les uns aux autres selon la direction longitudinale L2 de la bande continue 2.

Les fils de renfort 4 pourront être multibrins, c'est-à-dire formés chacun d'un assemblage de plusieurs brins entrelacés, ou bien, de préférence, monobrin, c'est-à-dire formé chacun d'un unique brin d'un seul tenant.

Les fils de renfort 4 pourront être réalisé dans tout matériau moins sensible à l'extension que la couche de gomme 3. Lesdits fils de renfort 4 pourront ainsi être réalisés de préférence dans un matériau métallique, ou le cas échéant dans un matériau composite combinant des fibres métalliques avec des fibres réalisées dans au moins un autre matériau, tel que par exemple des fibres de verre ou des fibres d'aramide.

La nappe droit fil pourra être obtenue par tout procédé approprié, tel que calandrage ou extrusion.

Le système de coupe 1 est agencé de manière à pouvoir sectionner la bande continue 2 transversalement à la direction longitudinale L2, sur toute la largeur W2 de ladite bande continue 2 comprise entre la première lisière 2A et la seconde lisière 2B, afin de subdiviser ladite bande continue 2 en bandelettes 5 successives possédant une longueur prédéterminée, qui est inférieure à la longueur initiale de la bande continue 2.

A ce titre, on notera que le système de coupe 1 selon l'invention est de préférence conçu, notamment quant à la dureté des organes coupants qu'il utilise et quant à la pression de coupe qu'il peut exercer sur la bande continue 2, de manière à pouvoir sectionner les fils de renfort 4, notamment les fils de renfort 4 métalliques, qui se trouvent répartis sur la largeur W2 de la bande continue 2.

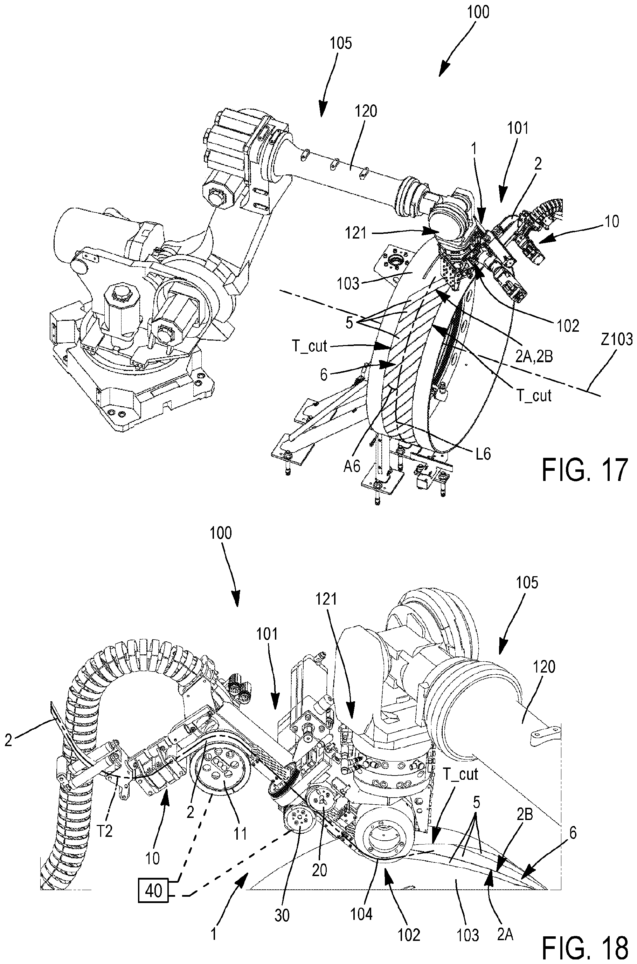

Tel que cela est notamment illustré sur la figure 17, les bandelettes 5, en particulier les bandelettes 5 issues de la découpe d'une bande continue 2 renforcée de type nappe droit fil, pourront par exemple être utilisées pour constituer une nappe de renfort 6, destinée par exemple à renforcer le sommet d'un bandage, tel qu'un bandage pneumatique, et notamment destinée à entrer dans la composition d'une architecture radiale de bandage pneumatique.

On notera que les bandelettes 5, aboutées les unes aux autres par leurs lisières 2A, 2B pour former la nappe de renfort 6, sont de préférence disposée en oblique par rapport à la direction longitudinale L6 de ladite nappe de renfort, de manière à ce que les fils de renfort 4 présents dans les bandelettes forment un angle, dit « angle de nappe » A6, non nul, par rapport à la direction longitudinale L6 de la nappe, tel que cela est notamment visible sur la figure 17.

On appelle « angle de coupe » A_cut l'angle que forme le tracé de coupe T_cut de la bandelette 5, au point considéré dudit tracé de coupe T_cut, par rapport à la direction longitudinale L2.

En pratique, l'angle de coupe A_cut est choisi en fonction de l'angle de nappe A6 visé, et peut de préférence être est sensiblement voire exactement égal audit angle de nappe A6 visé.

Selon l'invention, le système de coupe 1 comprend un dispositif d'entraînement 10, qui est agencé pour entraîner la bande continue 2 le long d'un chemin de bande T2 selon une vitesse dite « vitesse d'avance » V_fwd.

Ladite vitesse d'avance V_fwd est orientée selon la direction longitudinale L2 de ladite bande continue 2.

Le dispositif d'entraînement 10 pourra par exemple comprendre un ou des galets d'entraînement 11 motorisés chargés de mettre en mouvement la bande continue 2, de préférence par friction.

Le dispositif d'entraînement 10 sera de préférence animé par un moteur électrique, placé sous la dépendance d'un contrôleur qui appliquera audit moteur électrique la consigne adaptée pour obtenir la vitesse d'avance V_fwd souhaitée.

Le système de coupe 1 comprend ensuite un premier rouleau de coupe 20, qui est monté de sorte à pouvoir être entraîné dans un premier mouvement de rotation R20, selon une vitesse de rotation R20 choisie, autour d'un premier axe de rotation Z20 qui est orienté transversalement au chemin de bande T2, de préférence perpendiculairement audit chemin de bande T2.

Le premier axe de rotation Z20 correspond en pratique à l'axe central du premier rouleau de coupe 20, qui présente de préférence une forme sensiblement cylindrique de base circulaire centrée sur ledit axe Z20.

Par commodité de description, on pourra assimiler, sous une même référence R20, le mouvement de rotation R20 du premier rouleau de coupe 20 et la vitesse de rotation R20 à laquelle s'opère ledit mouvement de rotation.

Tel que cela est notamment visible sur les figures 1 à 8 et 15, le premier rouleau de coupe 20 est pourvu d'une première lame hélicoïdale 21 qui s'étend en hélice autour du premier axe de rotation Z20.

La première lame 21 hélicoïdale, par sa forme en vis sans fin, constitue avantageusement un moyen compact de réaliser une coupe de la bande continue 2 sur toute la largeur W2 de ladite bande continue, et ce quel que soit l'angle de coupe A cut envisagé, comme on le verra par la suite.

A ce titre, la première lame hélicoïdale 21 s'étend de préférence en hélice autour du premier axe de rotation Z20 sur une distance W21, considérée le long du premier axe de rotation Z20, et dite « largeur utile de lame » W21, qui est suffisante pour permettre à ladite première lame 21 de parcourir et couper toute la largeur W2 de la bande continue 2, depuis la première lisière 2A jusqu'à la seconde lisière2B, et qui est donc au moins égale, et de préférence strictement supérieure, à la largeur W2.

Ici, on a donc W21 > W2.

Plus préférentiellement, on prévoira de faire déborder axialement la première lame hélicoïdale 21 d'une valeur de dégagement latéral WA, WB donnée de chaque côté de la largeur de bande W2.

Chaque valeur de dégagement A, WB sera de préférence comprise entre 2 mm et 5 mm, voire 10 mm si bien que l'on aura :

$$W2 + 4\ mm \leq W21 \leq W2 + 10\ mm$$

voire :

$$W2 + 4\ mm \leq W21 \leq W2 + 20\ mm$$

De préférence, la première lame 21 fait saillie radialement par rapport à la surface cylindrique du premier rouleau de coupe 20 contre laquelle la bande continue 2 vient en appui lors de la coupe. Le premier organe de coupe 20 forme ainsi un organe de coupe « mâle ».

De préférence, et par convention de description, on considérera que la première lame 21, et plus globalement le système de coupe 1, débute la coupe par la première lisière 2A, dite « bord d'attaque », et termine la coupe par la seconde lisière 2B, dite « bord de fuite ».

Ce faisant, la première lame 21 sectionne bien entendu, au fur et à mesure de sa progression sur la largeur W2 de la bande continue 2, les différents fils de renfort 4 qui se situent entre lesdites première lisière 2A et seconde lisière 2B, et que croise donc le tracé de coupe T cut.

Le système de coupe 1 comprend également un second rouleau de coupe 30, qui est monté en rotation autour d'un second axe de rotation Z30, de préférence parallèle au premier axe de rotation Z20, selon un second mouvement de rotation R30 de sens contraire au mouvement de rotation R20 du premier rouleau de coupe 20.

Ledit second rouleau de coupe 30 est agencé de sorte à pouvoir, lorsque la bande continue 2 est engagée entre les premier et second rouleaux de coupe 20, 30, coopérer avec la première lame hélicoïdale 21 pour couper la bande continue 2 sur toute la largeur W2 de ladite bande continue 2, depuis la première lisière 2A jusqu'à la seconde lisière 2B.

On notera R30 la vitesse de rotation du second rouleau de coupe 30, en assimilant, ici encore, le mouvement de rotation et la vitesse de rotation du second rouleau 30 sous une même référence R30.

L'utilisation de rouleaux de coupe 20, 30 contrarotatifs, à organes coupants hélicoïdaux, permet avantageusement de réaliser une coupe nette et « à la volée » de la bande continue 2, alors que cette dernière est en mouvement selon une vitesse d'avance V_fwd non nulle.

Les rouleaux de coupe 20, 30 tourneront de préférence avantageusement dans un sens qui est le même que celui de la vitesse d'avance V_fwd de la bande continue 2, afin d'accompagner le mouvement de ladite bande continue 2 au moins pendant l'opération de coupe.

L'entraînement des rouleaux de coupe 20, 30 sera de préférence réalisé par un moteur électrique.

On peut bien entendu envisager différentes variantes de formes géométriques pour les organes coupants des rouleaux de coupe 20, 30.

Selon une possibilité préférentielle d'agencement, tel que cela est notamment illustré sur les figures 1, 2, 3, 5, 7, 8, 12, 13, 14 et 15, le second rouleau de coupe 30 présente une rainure hélicoïdale 31 de forme conjuguée à la première lame 21.

Ladite rainure hélicoïdale 31 sera agencée radialement en creux par rapport à la surface cylindrique du second rouleau 30 sur laquelle la bande continue 2 vient en appui pendant la coupe.

Selon un tel agencement, la lame 21 forme un organe coupant mâle et la rainure hélicoïdale 31 un organe coupant femelle.

Un tel agencement permet d'obtenir, au moyen d'organes coupants 21, 31 qui présentent des formes relativement simples, un cisaillement efficace de la bande continue 2 entre la première lame 21 et la rainure 31, dans le sens de l'épaisseur de ladite bande continue 2.

De même que la lame hélicoïdale 21, la rainure hélicoïdale 31 s'étendra de préférence, le long du second axe de rotation Z30, sur une distance suffisante pour couvrir au moins la largeur W2 de la bande continue 2, et plus préférentiellement sur une distance égale, ou au moins égale, à la distance W21 occupée par la première lame 21 hélicoïdale.

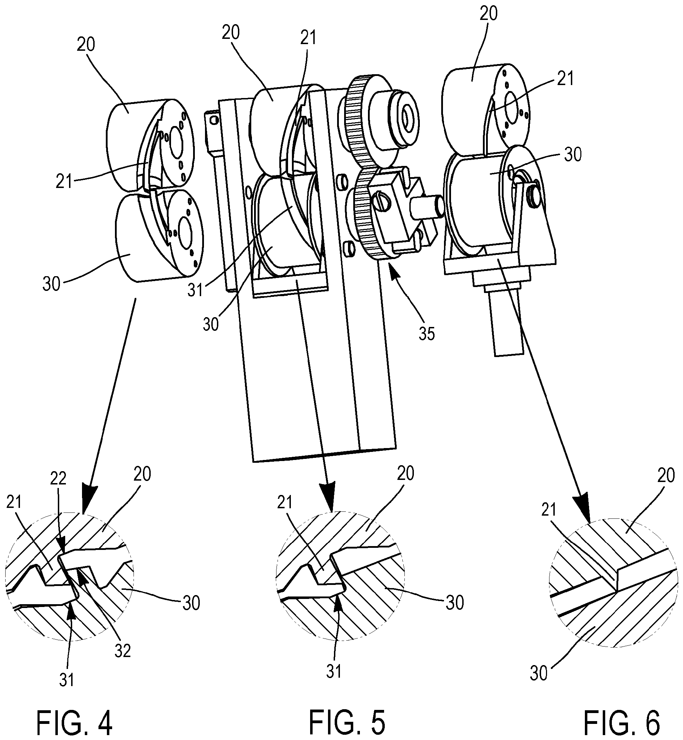

Bien entendu, on pourra envisager toute autre variante d'agencement des organes coupants, par exemple une variante à double lame, telle que représentée sur la figure 4, au sein de laquelle chaque rouleau de coupe 20, 30 possède à la fois une lame hélicoïdale saillante 21, 32 et une rainure hélicoïdale rentrante 22, 31 adaptée pour accueillir la lame hélicoïdale de l'autre rouleau de coupe.

Dans une autre variante, représentée sur la figure 6, le second rouleau de coupe 30 présente une surface dépourvue de relief conjugué à la lame hélicoïdale 21 du premier rouleau de coupe 20, c'est-à-dire dépourvue de rainure hélicoïdale, et forme ainsi une enclume sur laquelle le tranchant de ladite lame hélicoïdale 21 vient s'appuyer à plat.

Toutefois, les variantes utilisant des reliefs de type lame saillante/rainure rentrante seront préférées, en raison de l'efficacité des bords tranchants ainsi constitués.

Bien entendu, on prévoira une interférence radiale non nulle entre les rouleaux de coupe 20, 30, c'est-à-dire une profondeur non nulle selon laquelle la première lame 21 pénètre dans la rainure hélicoïdale 31, ou, le cas échéant, une hauteur non nulle selon laquelle la première lame 21 et la seconde lame 32 se chevauche radialement, de sorte à pouvoir cisailler efficacement la bande continue 2, à travers toute son épaisseur, avec ladite lame 21 ou lesdites lames 21, 32. Le cas échéant, ladite interférence radiale pourra être légèrement supérieure à l'épaisseur de la bande continue 2 à découper.

De préférence, cette interférence radiale sera comprise entre 1 mm et 2 mm.

Une valeur d'interférence radiale de l'ordre de 1 mm sera notamment bien adaptée à des bandes continues 2 présentant une épaisseur de 0,8 mm.

L'entraxe entre les premier et second axes de rotation Z20, Z30 sera ajusté en conséquence.

Par commodité de description, on pourra désigner par « organes coupants » la ou les lames 21, 32, et/ou la ou les rainures hélicoïdales 31, 22 conjuguées, qui permettent aux rouleaux de coupe 20, 30 d'exercer leur action de coupe sur la bande continue 2.

On pourra par ailleurs prévoir de préférence un système de contrôle de jeu axial qui permettra :

- soit de rattraper automatiquement le jeu axial entre le premier rouleau de coupe 20 et le second rouleau de coupe 30, par exemple au moyen d'un ressort agissant axialement sur l'un desdits rouleaux de coupe, de sorte à plaquer axialement la lame 21 contre la rainure hélicoïdale 31, et d'avoir ainsi un jeu axial nul pendant la coupe,

- soit, selon une variante qui peut constituer une invention à part entière, de régler un jeu axial fixe non nul prédéterminé entre la lame 21 et la rainure hélicoïdale 31, par exemple un jeu strictement supérieur à 0 mm et inférieur ou égal à 1,5 mm. Les inventeurs ont en effet constaté qu'un tel jeu fixe pouvait permettre d'obtenir des coupes de meilleure qualité sur certains types de bandes continues 2, notamment sur des bandes continues à fils de renfort 4 monobrins. Le réglage du jeu axial pourra par exemple être réalisé au moyen d'une ou plusieurs butées ajustables, telles que des butées à vis, qui permettront de positionner précisément les rouleaux de coupe 20, 30 l'un par rapport à l'autre, le long de leurs axes de rotation Z20, Z30 respectifs.

De préférence, notamment par souci de compacité et de simplicité d'asservissement, le premier rouleau de coupe 20 et le second rouleau de coupe 30, qui sont disposés de part et d'autre du chemin de bande T2 qui passe entre lesdits rouleaux de coupe 20, 30, seront orientés de telle sorte que leurs axes de rotation Z20, Z30 soient perpendiculaires à la direction longitudinale L2 de la bande continue 2, et sensiblement voire exactement parallèles aux surfaces de ladite bande continue 2 qui viennent en appui contre lesdits rouleaux de coupe 20, 30.

En outre, lesdits premier et second rouleaux de coupe 20, 30 seront de préférence entraînés de façon synchrone, c'est-à-dire que la vitesse de rotation R30 du second rouleau de coupe 30 sera de préférence égale, en valeur absolue, à la vitesse de rotation R20 du premier rouleau de coupe 20, bien que ces deux vitesses soient de signes opposés. Ainsi on aura :

$$R30 = -R20$$

Un tel synchronisme, de préférence permanent, permettra avantageusement d'obtenir une coupe sans glissement, et de garantir un mouvement fluide, sans interférences néfastes, des formes hélicoïdales conjuguées des organes coupants que sont la ou les lames 21, 32 et la ou les rainures 31, 22 conjuguées.

Le synchronisme entre le premier et le second rouleau de coupe 20, 30 pourra être obtenue par exemple de façon directe au moyen d'un engrenage 35, tel que cela est illustré sur la figure 5.

Selon l'invention, le système de coupe 1 comprend en outre avantageusement un synchroniseur variable 40, qui permet de sélectionner et de modifier le rapport, dit « rapport de synchronisation » K, entre la vitesse de rotation R20 du premier rouleau de coupe et la vitesse d'avance V_fwd, de préférence non nulle, de la bande continue 2, de manière à pouvoir ajuster l'angle dit « angle de coupe » A cut selon lequel on oriente la coupe de la bande continue 2 par rapport à la direction longitudinale L2 de ladite bande continue 2.

En pratique, le synchroniseur variable 40 permet donc de lier, par un rapport de synchronisation K de valeur choisie et modifiable, la vitesse de rotation R20 du premier rouleau de coupe 20 (et par conséquent la vitesse de rotation R30 du second rouleau de coupe 30) à la vitesse d'avance V_fwd qui est conférée à la bande continue 2 par le dispositif d'entraînement 10, et ce quelle que soit ladite vitesse d'avance V_fwd, et notamment quelle que soit la vitesse d'avance V_fwd non nulle :

$$R20 = K*V\_fwd$$

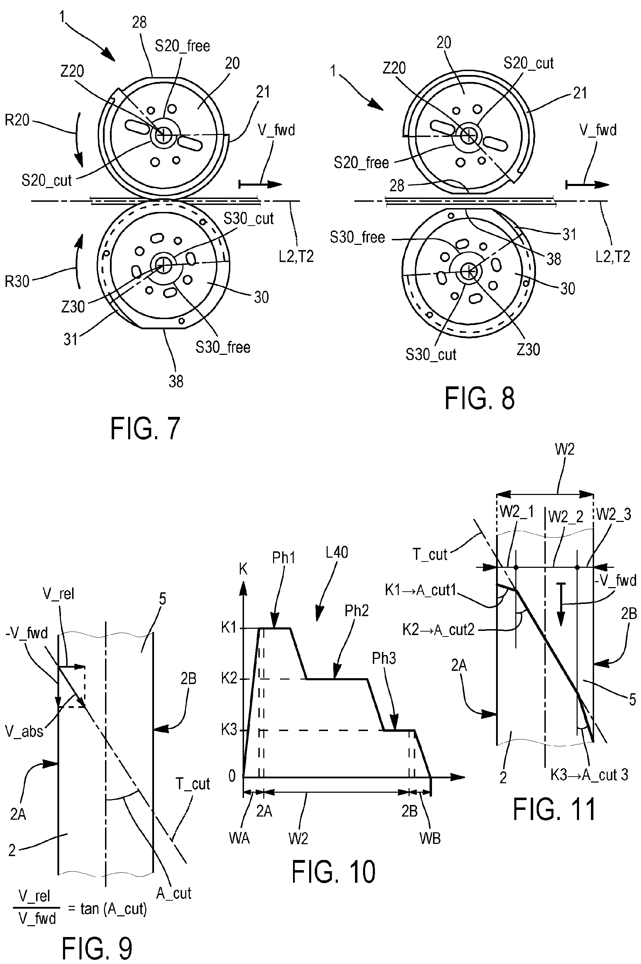

Tel que cela est illustré sur la figure 9, le synchroniseur variable 40 permet ainsi de sélectionner et de modifier le rapport

- entre d'une part la vitesse dite « vitesse relative de coupe » V_rel que décrit, transversalement à la direction longitudinale L2 de la bande continue, le point du premier rouleau de coupe 20, ici le point de la première lame hélicoïdale 21, qui est en prise avec la bande continue 2 à l'instant considéré pendant l'opération de coupe ; cette vitesse relative de coupe V_rel, linéaire, résulte ici de la vitesse de rotation R20 du premier rouleau de coupe 20, en l'occurrence selon un coefficient de conversion proportionnel c1 qui dépend du pas de la première lame hélicoïdale 21 : V_rel = c1*R20 ;

- et d'autre part au moins une vitesse d'avance V_fwd non nulle,

et ce de manière à pouvoir ajuster l'angle dit « angle de coupe » A cut selon lequel on oriente, à l'instant considéré, la direction selon laquelle on coupe de la bande continue 2 par rapport à la direction longitudinale L2 de ladite bande continue.

En effet, plus globalement, et ce quelle que soit la nature de l'outil de coupe utilisé (rouleau de coupe 20 à lame hélicoïdale, ou même autre moyen de coupe ponctuel tel que jet d'eau ou laser), le rapport de synchronisation K permet de définir, dans la plan de la bande continue 2, la relation entre les deux composantes V_fwd, V rel d'un vecteur de coupe résultant V_abs, qui définit le vecteur directeur du tracé de coupe T_cut à l'instant considéré.

Ces deux composantes sont d'une part la vitesse d'avance longitudinale V_fwd portée par la direction longitudinale L2, et d'autre part la vitesse relative de coupe V rel qui correspond au déplacement du point de coupe transversalement, ici perpendiculairement, à la direction longitudinale L2.

Ici, en ayant choisi et en connaissant la vitesse d'avance V_fwd, que l'on pourra considérer comme la valeur « maître », on pourra réguler la vitesse de rotation R20 du premier rouleau de coupe 20, considérée comme la valeur « esclave », en appliquant simplement la formule suivante : R20 = K*V_fwd.

Il en résultera une vitesse relative de coupe V_rel, linéaire :

$$V\_rel = c1*R20 = c1*K*V\_fwd.$$

Tel que cela est visible sur la figure 9, on aura alors, en chaque point du tracé de coupe T_cut, du fait de la composition des vitesses telle que pilotée au moyen du rapport de synchronisation K :

$$A\_cut = Arctan\ (V\_rel\ /\ V\_fwd) = Arctan\ (c1*K)$$

Le vecteur de coupe résultant V_abs aura ainsi pour composantes :

$$V\_abs\ (V\_fwd,\ V\_rel)$$

$$donc\ V\_abs\ (V\_fwd,\ c1*R20)$$

$$donc\ V\_abs\ (V\_fwd,\ c1*K*V\_fwd)$$

On notera que, par simple commodité de représentation, dans la mesure où la vitesse d'avance V_fwd représente la vitesse de déplacement de la bande continue 2 par rapport à la position des rouleaux de coupe 20, 30, on a en toute rigueur considéré sur la figure 9 une composante de vitesse longitudinale -V_fwd qui vaut l'opposé de la vitesse d'avance V_fwd, et qui correspond donc fictivement à la composante de vitesse longitudinale du point de coupe de la première lame 21, et plus globalement à la composante de vitesse longitudinale du point de coupe défini par les organes coupants des premier et second rouleaux de coupe 20, par rapport à la bande continue 2.

Bien entendu, la valeur effective de la vitesse d'avance V_fwd, de même que la valeur effective de la vitesse de rotation R20 du premier rouleau de coupe 20, pourront de préférence être évaluées ou mesurées par tout système de mesure ou tout capteur approprié, connecté fonctionnellement au synchroniseur variable 40.

En tout état de cause, l'invention permettra avantageusement de choisir le rapport de synchronisation K parmi plusieurs valeurs possibles, et de préférence de façon continue selon n'importe quelle valeur comprise dans une plage de valeurs prédéterminées.

De ce fait, on pourra choisir et modifier l'angle de coupe A_cut dans une plage prédéterminée, et ce sans avoir à modifier les rouleaux de coupe 20, 30 eux-mêmes, ni plus globalement la configuration matérielle du système de coupe 1.

Typiquement, avec un même jeu de rouleaux de coupe 20, 30, et simplement en adaptant le rapport de synchronisation K, on pourra de préférence ajuster, et notamment augmenter en valeur absolue, l'angle de coupe A_cut sur une plage d'amplitude d'au moins 10 degrés, voire de 15 degrés, par rapport à une valeur de référence qui correspond à la valeur minimale, en valeur absolue, de l'angle de coupe A_cut que l'on peut obtenir avec la lame hélicoïdale 21 du jeu de rouleau de coupe 20, 30 concerné.

En pratique, cette valeur de référence dépend notamment de l'angle d'hélice de la première lame hélicoïdale 21, considéré par rapport à l'axe de rotation Z20 du premier rouleau 20 portant ladite première lame hélicoïdale 21. En particulier, ladite valeur de référence pourra être sensiblement égale, par exemple à +/1 degrés, à la valeur de l'angle d'hélice de de ladite lame hélicoïdale 21.

A titre d'exemple, avec un seul et même agencement géométrique des rouleaux de coupe 20, 30, dont l'angle d'hélice de la lame hélicoïdale 21, respectivement de la rainure hélicoïdale 31, était de 24,2 degrés, les inventeur ont pu, en adaptant uniquement le rapport de synchronisation K, sectionner une bande continue 2 de de largeur W2 = 45 mm selon des angles de coupe librement choisis dans une plage comprise entre 25 degrés et 38 degrés.

On notera également que l'invention est applicable aussi bien lorsque la vitesse d'avance V_fwd est constante que lorsque, en variante, la vitesse d'avance V_fwd varie au cours du temps.

En particulier, l'invention permet au besoin d'adapter en temps réel, pendant l'opération de coupe, et conformément au rapport de synchronisation K applicable à l'instant considéré, la vitesse de rotation R20 du premier rouleau de coupe 20, pour compenser des fluctuations, subies et/ou imposées, de la vitesse d'avance V_fwd qui surviennent pendant ladite opération de coupe.

De telles variations de la vitesse d'avance V_fwd peuvent par exemple être commandées pendant l'opération de pose de la bandelette 5 pour adapter ladite vitesse d'avance V_fwd à la vitesse à laquelle on pose la bandelette 5 objet de la coupe sur un support d'assemblage 103, en particulier s'il est nécessaire de faire varier la vitesse de pose pour l'adapter à une forme particulière de support d'assemblage 103, par exemple une forme bombée.

Si le rapport de synchronisation K applicable sur une période donnée de l'opération de coupe est constant, le synchroniseur 40 fera avantageusement varier la vitesse de rotation R20 du premier rouleau de coupe 20 en fonction (inversement proportionnelle) des variations de la vitesse d'avance V_fwd, de sorte à maintenir un rapport K constant entre ces vitesses R20, V_fwd.

En pratique, pendant l'opération de coupe, la vitesse d'avance V_fwd, qu'elle soit constante ou variable, pourra être de préférence égale ou supérieure à 0,5 m/s, voire à 0,7 m/s.

De préférence, pendant l'opération de coupe, la vitesse d'avance V_fwd pourra par ailleurs être inférieure ou égale à 2 m/s, voire à 1,5 m/s.

A titre d'exemple préférentiel, pendant l'opération de coupe, la vitesse d'avance V_fwd, qu'elle soit constante ou variable, pourra être de comprise entre 0,7 m/s et 1,2 m/s.

En outre, l'invention permet d'ajuster et de faire varier au besoin en temps réel, pendant l'opération de coupe, le rapport de synchronisation K.

De préférence, par commodité d'asservissement, on pourra modifier le rapport de synchronisation K tandis que l'on conserve par ailleurs une vitesse d'avance V_fwd constante.

Ceci étant, il n'est pas exclu de faire varier volontairement le rapport de synchronisation K simultanément à des variations de la vitesse d'avance V_fwd. Ces variations de la vitesse d'avance V_fwd pourront être éventuellement subies, ou au contraire commandées intentionnellement dans le cadre d'un asservissement double, incluant un asservissement en vitesse d'avance V_fwd et simultanément un asservissement en rapport de synchronisation K.

De préférence, le synchroniseur variable 40 comprend au moins une loi de synchronisation L40 qui, tel que cela est illustré par exemple sur les figures 10 et 11, modifie dynamiquement le rapport de synchronisation K pendant que la première lame 21 est en prise sur la bande continue 2, entre la première lisière 2A et la seconde lisière 2B, de sorte à fixer successivement plusieurs rapports de synchronisation de valeurs différentes K1, K2, K3 sur une même largeur de coupe W2 de la bande continue 2.

On notera du reste qu'un tel principe de synchronisation variable est potentiellement applicable quel que soit l'agencement de l'organe coupant qui est monté mobile transversalement à la bande continue 2, et notamment quel que soit l'agencement de la lame hélicoïdale 21.

Dans l'absolu, on pourrait par exemple utiliser un organe coupant du type laser, jet d'eau, et asservir pareillement son déplacement en translation transversalement, de préférence perpendiculairement, à la direction longitudinale L2, c'est-à-dire asservir sa vitesse relative de coupe V_rel, en fonction de la vitesse d'avance V_fwd et de l'angle de coupe A_cut souhaité, et donc en fonction de la vitesse d'avance V_fwd et du rapport de synchronisation K souhaité.

Une première application d'un tel asservissement du rapport de synchronisation K, et donc de réorientation en temps réel de la tangente au tracé de coupe T_cut, au fur et à mesure que l'organe coupant, ici la première lame hélicoïdale 21, progresse sur la largeur de la bande continue 2, peut être, selon une caractéristique qui peut constituer une invention à part entière, la réalisation de tracés de coupe T_cut intentionnellement non rectilignes, par exemple convexes ou au contraires concaves, sous forme de lignes brisées ou bien encore sous forme de lignes incurvés.

On pourra notamment conférer au front de coupe d'une bandelette 5 une forme convexe, bombée en saillie longitudinale par rapport à la bandelette 5, ou au contraire une forme concave, que ce soit sous forme d'une ligne brisée ou sous forme d'une ligne incurvée, dans le but d'adapter la forme dudit front de coupe à une pose de ladite bandelette 5 sur une surface gauche, telle qu'une surface conique ou toroïdale.

En effet, la pose sur une surface gauche d'une bandelette 5, initialement plane, qui présente un front de coupe rectiligne, génèrera un décalage, dit « rayon de bord », entre ledit front de coupe rectiligne et le bord correspondant de la surface gauche, du fait que ledit front de coupe rectiligne ne correspond pas à la développée de ladite surface gauche.

A l'inverse, si l'on corrige le front de coupe de la bandelette 15 pour lui conférer un tracé de coupe T_cut non rectiligne, par exemple convexe s'il doit épouser une surface gauche convexe, qui correspond sensiblement à la développée de ladite surface gauche, alors la bandelette épousera parfaitement le bord considéré de ladite surface gauche (ou, le cas échéant, toute ligne dite « parallèle » correspondant à l'intersection de ladite surface gauche avec un plan normal à l'axe de révolution de ladite surface gauche, par analogie avec les parallèles à l'équateur d'une sphère).

Une seconde application de l'asservissement du rapport de synchronisation K peut être la compensation des « effets de bord » liés au comportement de la bande continue au niveau des lisières 2A, 2B lors de l'action de coupe exercée par les rouleaux de coupe 20, 30.

Les inventeurs ont en effet constaté que, lorsque l'on souhaite opérer une découpe selon un angle de coupe A_cut prédéterminé, on observe, au début de la coupe, c'est-à-dire lorsque la première lame 21 se présente au niveau de la première lisière 2A et engage celle-ci pour pénétrer dans la bande continue 2, que la première lisière 2A tend à fléchir et à absorber élastiquement l'effort de coupe, et ainsi à se dérober à l'action de la lame 21, tandis que la première lame 21 tend à glisser le long du premier fil de renfort 4, si bien qu'il est difficile d'inciser la première lisière 2A et d'entamer la bande continue 2 de façon nette, exactement selon l'angle de coupe A_cut voulu. On observe ici un premier effet de bord, associé au bord d'attaque.

A l'inverse, en fin de coupe, plus on approche de la seconde lisière 2B, plus la section résiduelle qui maintient la bandelette 5 en cours de détachement du reste de la bande continue 2 diminue, et donc s'affaiblit, ce qui rend la bande continue 2 plus molle et donc plus sujette à la déformation. En particulier, comme cela est schématisé sur les figures 19A et 19B, sous l'effet des efforts de traction exercés par le dispositif d'entraînement 10 et/ou par le support d'assemblage 103 sur la bande continue 2, respectivement sur la bandelette 5 en cours de détachement, la bande continue 2 a tendance à s'ouvrir dans la zone du tracé de coupe T_cut déjà parcouru, et donc à s'incurver en lacet, comme si elle se déchirait ; ceci équivaut en quelque sorte, géométriquement, à faire basculer localement la direction longitudinale L2 du matériau constitutif de la bande continue par rapport à la direction longitudinale L2 nominale globale. Si l'on maintient une consigne d'angle de coupe constante à l'approche de la seconde lisière 2B, on tend donc à obtenir un tracé de coupe T_cut effectif qui diverge du tracé de coupe T_cut souhaité, en ayant tendance à s'éloigner de la direction longitudinale L2 nominale. On obtient alors un tracé de coupe T_cut "émoussé", qui forme une sorte de bourrelet arrondi à la pointe biseautée du front de la bande continue 2 qui résulte de l'opération de coupe. On observe donc ici un second effet de bord, associé au bord de fuite 2B.

C'est pourquoi, de préférence, la loi de synchronisation L40 adapte le rapport de synchronisation K pour compenser des effets dits « effets de bord » qui sont liés au comportement de déformation élastique de la bande continue 2 au niveau de ses lisières 2A, 2B, en appliquant un rapport de synchronisation K, K1 majoré au niveau du bord d'attaque 2A, c'est-à-dire ici au niveau de la première lisière 2A, et/ou respectivement en appliquant un rapport de synchronisation K, K3 minoré au niveau du bord de fuite 2B, c'est-à-dire ici au niveau de la seconde lisière 2B.

En d'autres termes, l'invention propose de majorer le rapport de synchronisation K au niveau du bord d'attaque 2A, et de minorer le rapport de synchronisation K au niveau du bord de fuite 2B.

De préférence, le rapport de synchronisation K, K3 minoré qui est appliqué au niveau du bord de fuite 2B est strictement inférieur, en valeur absolue, au rapport de synchronisation K, K1 majoré qui est utilisé au niveau du bord d'attaque 2A.

Par « majoré », on indique que le rapport de synchronisation K, K1 effectivement appliqué est augmenté, c'est-à-dire choisi strictement supérieur, en valeur absolue, au rapport de synchronisation dit « nominal » qui correspondrait géométriquement, de façon théorique, c'est-à-dire en l'absence d'effets de bord, à l'angle de coupe A_cut souhaité. La valeur de majoration que l'on ajoute au rapport de synchronisation nominal pour obtenir le rapport de synchronisation majoré effectivement appliqué comme consigne pour le pilotage des rouleaux de coupe 20, 30 correspond bien entendu au degré de correction qui est nécessaire à la compensation de l'effet de bord concerné. Cette valeur de majoration peut être déterminée de manière empirique, pour chaque type de bande continue 2, par des essais appropriés.

En appliquant un rapport de synchronisation K1 majoré au niveau du bord d'attaque 2A, on oriente initialement la direction de coupe, vis-à-vis dudit bord d'attaque 2A, selon un angle de pénétration plus marqué (plus accentué) que l'angle de coupe nominal visé, ce qui procure un meilleur effort tranchant et facilite donc le sectionnement de la première lisière 2A de la bande continue 2 et du fil de renfort 4 correspondant.

Par « minoré », on indique à l'inverse que, à l'approche du bord de fuite 2B, le rapport de synchronisation K, K3 est réduit, pour être strictement inférieur, en valeur absolue, au rapport de synchronisation nominal, et ce d'une valeur de minoration qui correspond au degré de correction adapté à la compensation de la divergence due à l'effet de bord concerné, compensation qui consiste donc ici à rabattre l'angle de coupe vers la direction longitudinale L2 nominale.

On notera que, en particulier, et selon une caractéristique qui peut constituer une invention à part entière, l'invention permet de prévoir un rapport de synchronisation K, K1, K3, et donc un angle de coupe A_cut, A_cut1, A_cut3, qui est différent au niveau du bord d'attaque 2A de ce qu'il est au niveau du bord de fuite 2B, et notamment qui est plus élevé au niveau du bord d'attaque 2A qu'au niveau du bord de fuite 2B.

Selon un exemple préférentiel d'application, la loi de synchronisation L40 est définie de manière à permettre l'obtention d'un tracé de coupe T_cut effectif rectiligne qui forme, par rapport à la direction longitudinale L2 de la bande continue 2, un angle de coupe dit « angle de coupe nominal » A_cut2 prédéterminé, auquel correspond géométriquement un rapport de synchronisation dit « rapport de synchronisation nominal » K2.

De préférence, la loi de synchronisation L40 peut alors comprendre, de manière à pouvoir compenser au moins en partie les déformations de la bande continue 2 induites par l'opération de coupe au voisinage des premières et seconde lisières 2A, 2B, au moins trois phase successives, tel que cela est illustré sur la figure 10 :

- une première phase Ph1 dite « phase d'attaque », selon laquelle la loi de synchronisation L40 applique, lorsque la première lame 21 atteint et franchit la première lisière 2A formant un bord d'attaque, un premier rapport de synchronisation dit « rapport de synchronisation d'attaque » K1 qui est strictement supérieur (en valeur absolue) au rapport de synchronisation nominal K2 ; ce rapport de synchronisation d'attaque K1 correspond donc à un angle de coupe A cut1 qui est supérieur à l'angle de coupe nominal A_cut2, c'est-à-dire qui diverge davantage de la direction longitudinale L2 de la bande continue 2 que ledit angle de coupe nominal A_cut2,

- puis une seconde phase Ph2 dite « phase de coupe nominale », selon laquelle la loi de synchronisation L40 réduit (en valeur absolue) le rapport de synchronisation pour appliquer un second rapport de synchronisation égal au rapport de synchronisation nominal K2 correspondant à l'angle de coupe nominal A_cut2 visé,

- puis une troisième phase Ph3 dite « phase de fuite », selon laquelle la loi de synchronisation L40 réduit encore (en valeur absolue) le rapport de synchronisation de manière à appliquer, à l'approche de la seconde lisière 2B et lors du franchissement de ladite seconde lisière 2B formant un bord de fuite, un troisième rapport de synchronisation K3 dit « rapport de synchronisation de fuite » qui est strictement inférieur (en valeur absolue) au rapport de synchronisation nominal K2 ; ce rapport de synchronisation de fuite K3 correspond à un angle de coupe A_cut3 qui est inférieur à l'angle de coupe nominal A_cut2, c'est-à-dire qui diverge moins de la direction longitudinale L2 de la bande continue 2 que l'angle de coupe nominal A_cut2.

Avantageusement, les variations du rapport de synchronisation K permettront de corriger les effets de bord, et ainsi d'obtenir finalement un tracé de coupe T_cut effectif qui sera bel et bien rectiligne.

Dans l'exemple susmentionné, la loi subdivise la largeur W2 de la bande continue 2 en trois tronçons successifs W2_1, W2_2, W2_3, chacun se voyant attribuer un rapport de synchronisation K1, K2, K3 différent, qui va ici décroissant, en valeur absolue, d'un tronçon à l'autre, de telle sorte que l'angle de coupe A_cut1, A_cut2, A_cut3 est progressivement rabattu vers la direction longitudinale L2 de la bande continue 2.

Bien entendu, les transitions entre les différents rapports de synchronisation K1, K2, K3, et donc les transitions entre les tronçons successifs W2_1, W2_2, W2_3 susmentionnés, pourront être de préférence progressives, et correspondre typiquement à de nécessaires phases d'accélération puis de décélération de la première lame 21, et plus globalement à de nécessaires phases d'accélération puis de décélération des rouleaux de coupe 20, 30, relativement à la vitesse d'avance V_fwd, du fait que les vitesses, en particulier la vitesse de rotation R20 du premier rouleau de coupe 20, et par conséquent la vitesse relative de coupe V_rel, et donc le rapport de synchronisation K, ne peuvent en pratique pas être modifiés de façon discontinue.

De préférence, tel que cela est illustré sur la figure 10, le coefficient de synchronisation pourra être constant par plateaux, chaque plateau correspondant à l'une des valeurs K1, K2, K3 associée à l'une des différentes phases Ph1, Ph2, Ph3 susmentionnées.

Tel que cela est visible sur la figure 10, les transitions entre les plateaux se feront de façon continue, par exemple selon des rampes ou des lois d'évolution d'un degré adapté, suffisamment élevé pour assurer des accélérations ou des décélérations des rouleaux de coupe 20, 30 non dommageables auxdits rouleaux de coupe 20, 30 et à leur moteurs d'entraînement, et limitant les phénomènes d'inertie.

De préférence, tel que cela a été dit plus haut, on considérera comme valeur maître la vitesse d'avance V_fwd de la bande continue 2, et/ou, de manière analogue, la vitesse d'avance V_fwd de la bandelette 5 sortant du système de coupe 1, et l'on asservira en conséquence la vitesse de rotation R20 du premier rouleau de coupe 20, et celle R30, identique en valeur absolue, du second rouleau de coupe 30, de manière à obtenir le ou les rapports de synchronisation K, K1, K2, K3 souhaités.

On pourrait toutefois parfaitement, sans sortir du cadre de l'invention agir également sur la vitesse d'avance V_fwd, grâce au dispositif d'entrainement 10, pour ajuster le rapport de synchronisation K.

Dans tous les cas, on conserve la possibilité, grâce au synchroniseur variable 40, et pour toute vitesse d'avance V_fwd considéré, de choisir et de faire varier le rapport de synchronisation K parmi plusieurs rapports de synchronisation disponibles à la vitesse d'avance V_fwd considérée.

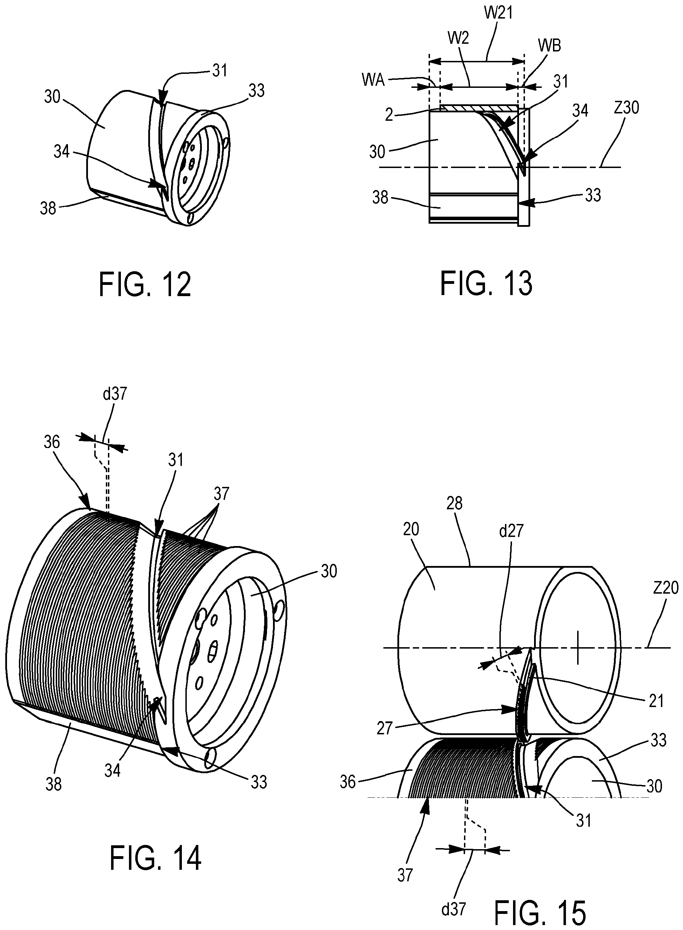

De préférence, selon une caractéristique qui peut constituer une invention à part entière, la première lame 21 hélicoïdale couvre axialement, le long du premier axe de rotation Z20 du premier rouleau de coupe 20, une distance, dite « largeur utile de lame » W21, qui est strictement supérieure à la largeur hors-tout W2 de la bande continue 2, de sorte à prévoir, tel que cela est illustré schématiquement sur les figures 1 et 13, d'une part, en débordement de la première lisière 2A selon ledit premier axe de rotation Z20, un dégagement latéral amont WA, qui permet au synchroniseur variable 40 de porter la vitesse de rotation R20 du premier rouleau de coupe 20 à une valeur souhaitée, correspondant au rapport de synchronisation K, K1 souhaité, avant que la première lame 21 n'entre au contact de la bande continue 2 au niveau de la première lisière 2A de ladite bande continue, et d'autre part, en débordement de la seconde lisière 2B selon ledit premier axe de rotation Z20, un dégagement latéral aval WB, qui permet de poursuivre, au-delà de la seconde lisière 2B, la première rotation R20, et donc le cheminement de la première lame 21 qui correspond à l'action de coupe exercée par ladite première lame, de telle sorte que le rapport de synchronisation K reste pilotable au moins jusqu'à l'instant où la bandelette 5 se détache complètement de la bande continue 2.

Avantageusement, le dégagement latéral amont WA permet de mettre en mouvement le premier rouleau de coupe 20 et d'accélérer celui-ci jusqu'à atteindre un régime établi qui correspond au rapport de synchronisation d'attaque K1 souhaité, avant que la première lame 21 n'atteigne et n'engage la bande continue 2. De la sorte, on peut engager l'action de coupe de manière franche et homogène.

De même, le dégagement latéral aval WB permet à la première lame 21 de poursuivre son action de coupe au-delà de la second lisière 2B, et plus particulièrement d'appliquer le rapport de synchronisation de fuite K3 au-delà de ladite seconde lisière 2B, puis de ralentir et stopper le premier rouleau de coupe 20 seulement après que la première lame 21 a franchi ladite seconde lisière 2B. De la sorte, on évite d'interrompre prématurément l'action de coupe, avant que bandelette 5 ne soit totalement séparée de la bande continue 2.

On peut ainsi maîtriser efficacement l'action de coupe, en réalisant les phases transitoires de mise en route des rouleaux de coupe 20, 30 en amont de la première lisière 2A, puis d'arrêt des rouleaux de coupe 20, 30 en aval de la seconde lisière 2B, en-dehors de la largeur W2 de la bande 2.

Bien entendu, si le second rouleau de coupe 30 présente une forme conjuguée à la première lame 21, par exemple une rainure hélicoïdale 31, celle-ci pourra également couvrir, le long de son axe de rotation Z30, une distance axiale au moins égale à la largeur utile de lame W21, de préférence égale à la largeur utile de lame W21 si les deux axes de rotation Z20, Z30 sont parallèles.

De préférence, tel que cela est illustré sur les figures 12, 13 et 14, l'un au moins des premier et second rouleaux de coupe 20, 30, de préférence le second rouleau de coupe 30, comprend un épaulement de guidage 33 qui est agencé pour former une butée latérale à l'encontre de la première lisière 2A ou de la seconde lisière 2B.

Un tel épaulement de guidage 33 assurera avantageusement un maintien latéral de la bande continue 2 pendant la coupe, en délimitant le chemin de bande T2 le long de l'axe de rotation Z20, Z30 du rouleau de coupe 20, 30 concerné.

Plus préférentiellement, ledit épaulement de guidage 33, de préférence annulaire, et qui est de préférence porté par le second rouleau de coupe 30 afin de ne pas interférer avec la première lame 21, sera placé de sorte à former une butée latérale à l'encontre de la seconde lisière 2B, et ce afin de s'opposer à la composante d'effort de coupe qui est orientée transversalement à la direction longitudinale L2 de la bande continue, selon l'axe de rotation Z30 dudit second rouleau de coupe 30, et dirigée dans le sens de la coupe, de la première lisière 2A vers la seconde lisière 2B.

Afin d'autoriser le dégagement latéral aval WB permettant à la première lame 21 de poursuivre son action de coupe au-delà de la seconde lisière 2B, tandis que ladite seconde lisière 2B est en appui sur l'épaulement de guidage 33, ledit épaulement de guidage 33 sera de préférence pourvu d'une encoche 34, tel que cela est visible sur les figures 12 à 14.

Ladite encoche 34 correspondra de préférence au prolongement de la rainure hélicoïdale 31 du second rouleau de coupe 30.

De préférence, tel qu'il a été dit plus haut, le système de coupe 1 peut être destiné à couper des bandes continues 2 qui comprennent des fils de renforts 4 continus qui sont agencés parallèlement aux première et second lisières 2A, 2B selon un pas d4 prédéterminé.

Le pas d4 correspond à l'espacement entre deux fils de renfort 4 consécutif sur la largeur W2 de la bande continue 2.

Avantageusement, tel que cela est illustré sur les figures 14 et 15, l'un au moins des premier et second rouleaux de coupe 20, 30, de préférence le second rouleau de coupe 30, peut alors préférentiellement comprendre une surface d'appui cylindrique 36, centrée sur l'axe de rotation Z30 dudit rouleau de coupe, sur laquelle la bande continue 2 vient prendre appui, et qui comporte une série de gorges 37 annulaires, orientées selon la direction longitudinale L2 de la bande continue 2, et donc de préférence perpendiculairement à l'axe de rotation Z30 du rouleau de coupe 30, de sorte que lesdites gorges 37 contribuent au maintien latéral de la bande continue 2, et/ou de la bandelette 5, pendant l'opération de coupe.

Avantageusement, grâce à l'élasticité de la gomme 3 prise en sandwich entre les rouleaux de coupe 20, 30, qui exercent ainsi une pression sur l'épaisseur de la bande continue 2, les fils de renforts 4 peuvent pénétrer tangentiellement dans lesdites gorges 37, ce qui améliore le guidage et le maintien latéral de la bande continue 2 pendant la coupe.

De préférence le pas d37 de répartition axiale des gorges 37 annulaires, agencées parallèlement les unes aux autres le long de l'axe de rotation Z30, correspondra au pas d4 des fils de renfort 4.

Toutefois, même s'il s'agit d'une possibilité de mise en œuvre, il n'est pas absolument nécessaire d'avoir une égalité entre le pas d37 de répartition des gorges 37 et le pas d4 de répartition des fils de renfort 4, car les inventeurs ont constaté que, de manière surprenante, on pouvait obtenir un effet de maintien latéral de la bande continue 2 dès lors que l'on mettait en œuvre une série de gorges 37 annulaires, même selon un pas d37 plus large que le pas d4 de répartition des fils de renfort 4, par exemple selon un pas d37 deux fois plus large que le pas d4 de répartition des fils de renfort 4, qui permet alors de retenir, en moyenne, un fil de renfort 4 sur deux.

De ce fait, avantageusement, il n'est pas nécessaire de changer systématiquement le second rouleau de coupe 30 strié lorsque l'on change la gamme de bande continue 2 à couper, et plus particulièrement lorsque l'on change le pas d4 de répartition des fils de renfort 4.

Le système de coupe 1 présente donc à ce titre une grande polyvalence.

De même, si le système de coupe 1 est destiné à couper des bandes continues 2 comprenant des fils de renforts 4 continus agencés parallèlement aux première et second lisières 2A, 2B selon un pas d4 prédéterminé, alors la première lame 21 peut préférentiellement comprendre, tel que cela est illustré sur la figure 15, des stries 27, orientées selon la direction longitudinale L2 de la bande continue 2, donc de préférence perpendiculairement à l'axe de rotation Z20 du premier rouleau de coupe 20, de sorte que lesdites stries 27 contribuent au maintien latéral de la bande continue 2 et/ou de la bandelette 5 pendant l'opération de coupe.

La première lame 21 forme ainsi une sorte de couteau denté.

De préférence, lesdites stries 27, parallèles les unes aux autres, seront espacées selon un pas d27 de répartition axiale qui correspond au pas d4 des fils de renfort : d27 = d4.

En outre, de façon particulièrement préférentielle, le pas d27 de répartition des stries 27 du premier rouleau de coupe 20, que ledit pas d27 de répartition des stries soit égal ou non au pas d4 des fils de renfort, sera égal au pas d37 de répartition de gorges 37 du second rouleau de coupe 30, de telle sorte que, au point de coupe, les stries 27 sont alignées avec les gorges 37, tangentiellement aux rouleaux de coupe 20, 30 et à la direction longitudinale L2.

Gorges 37 et stries 27 seront ainsi parfaitement complémentaires.

De préférence, la largeur axiale des empreintes en creux des gorges 37, respectivement des stries 27, pourra correspondre au diamètre des fils de renfort 4, pour optimiser la qualité de l'accueil et du maintien des fils de renfort 4 dans lesdites empreintes.

On notera du reste que l'utilisation de gorges 37 et/ou de stries 27 est particulièrement bien adaptée à la coupe de bandes continues 2 qui sont renforcées par des fils de renfort 4 monobrins (dits « single wire »).

Par ailleurs, selon une caractéristique préférentielle qui peut constituer une invention à part entière, la première lame 21 couvre moins d'un pas hélicoïdal autour du premier rouleau de coupe 20, c'est-à-dire moins de 360 degrés autour de son axe de rotation Z20, de manière à ce que ledit premier rouleau de coupe 20 présente, en azimut autour du premier axe de rotation Z20, tel que cela est visibles sur les figures 7 et 8, d'une part un secteur angulaire de coupe S20_cut, occupé par la première lame 21, et d'autre part un secteur angulaire de libre passage S20_free, qui est dépourvu de lame, et qui est agencé pour autoriser la bande continue 2 à défiler entre les premier et second rouleau de coupe 20, 30 sans faire subir d'action de coupe à ladite bande continue 2.

En d'autres termes, la première lame 21 s'interrompt, sans faire un tour complet autour du premier rouleau de coupe 20, de manière à définir d'une part un secteur angulaire coupant S20_cut, qui permet de réaliser la coupe, et d'autre par un secteur angulaire non coupant S20_free, qui permet de laisser passer librement la bande continue 2, sur la longueur nécessaire, entre deux traits de coupe T_cut consécutifs.

Il en va bien entendu de même pour le second rouleau de coupe 30, dont la rainure 31 occupe de préférence moins d'un pas hélicoïdal autour de l'axe Z30 du second rouleau de coupe 30, de sorte à former d'une part un secteur angulaire de coupe S30_cut, occupé par la rainure hélicoïdale 31, et d'autre part un secteur angulaire de libre passage S30_free.

Le système de coupe 1 permet donc d'actionner les rouleaux de coupe 20, 30 de façon discontinue, en activant la rotation R20, R30 desdits rouleaux de coupe, sur moins d'un tour, pour réaliser la coupe au moyen des secteurs angulaires de coupe S20_cut, S30_cut, puis, une fois la coupe effectuée, en interrompant ladite rotation R20, R30, tandis que les secteurs angulaire de libre passage S20_free, S30_free se présentent en vis-à-vis de la bande continue 2, et suppriment donc provisoirement l'interférence radiale entre les rouleaux de coupe 20, 30, pour autoriser le libre passage de ladite bande continue 2.

Le libre passage offert à la bande continue 2 entre les secteurs angulaires S20_free, S30_free permet notamment de gérer les phases transitoires de l'asservissement de la coupe, et notamment la phase de première accélération des rouleaux de coupe 20, 30 pour atteindre la vitesse de rotation d'attaque de la première lisière 2A conforme au rapport de synchronisation d'attaque K1 souhaité, puis la phase de décélération et d'arrêt des rouleaux de coupe 20, 30 une fois l'opération de coupe achevée.

Ce libre passage permet également de gérer les phases de mise en mouvement, d'accélération, de décélération et d'arrêt de ladite bande continue 2, nécessaires pour ajuster la vitesse d'avance V_fwd aux conditions de la pose.

Ce libre passage permet enfin, après une première coupe, de laisser passer entre les rouleaux de coupe 20, 30 une longueur de bande continue 2 qui correspond à la longueur souhaitée de la bandelette 5 en cours de réalisation, jusqu'à ce que l'on atteigne le point où débuter la coupe suivante, qui permet de détacher ladite bandelette 5 de la bande continue 2.

On pourra ainsi réaliser les coupes successives par des asservissements mono-tour, chaque cycle de coupe puis de libre défilement de la bande continue 2 étant réalisé en effectuant une seule rotation de chaque rouleau de coupe 20, 30.

Toutes les rotations mono-tour successives correspondant à la pluralité de traits de coupe réalisés successivement pour produire une série de bandelettes 5 seront de préférence effectuées toujours dans le même sens, qui dépend de l'orientation de l'angle d'hélice de la première lame 21 par rapport à la bande continue 2.

En activant les rouleaux de coupe 20, 30 seulement par intermittence, uniquement lorsqu'une coupe est nécessaire, on économise avantageusement de l'énergie.

On notera du reste que cette capacité du système de coupe 1 à adopter un mode d'activation intermittent, c'est-à-dire cette faculté de pouvoir déclencher (ou faire cesser) la mise en rotation des rouleaux de coupe 20, 30 indépendamment de la valeur de la vitesse d'avance V_fwd, et plus particulièrement indépendamment du fait que la bande continue 2 soit à l'arrêt (V_fwd = 0) ou en mouvement (V_fwd > 0), et encore plus particulièrement la capacité de pouvoir alternativement stopper puis redémarrer la rotation des rouleaux de coupe 20, 30 à organes coupants 21, 31 hélicoïdaux sans interrompre le défilement, à une vitesse d'avance V_fwd non nulle, de la bande continue 2 entre lesdits rouleaux de coupe 20, 30, peut constituer une invention à part entière.

En outre, l'agencement proposé évite de devoir déplacer les rouleaux de coupe 20, 30, et notamment de devoir alternativement éloigner les rouleaux de coupe 20, 30 du chemin de bande T2 pour autoriser un libre défilement de la bande continue 2 puis rapprocher de nouveau lesdits rouleaux de coupe 20, 30 du chemin de bande T2 pour réaliser une coupe.

Grâce à l'agencement, en l'espèce grâce à l'alternance, des secteurs angulaires de coupe S20_cut, S30_cut et respectivement de libre passage S20_free, S30_free selon l'invention, on peut en effet conserver un entraxe invariant dans le temps entre les deux rouleaux de coupe 20, 30, puisque le premier axe de rotation Z20 et le second axe de rotation Z30 peuvent rester fixes, à distance constante du chemin de bande T20 ; ceci garantit la précision et la reproductibilité des coupes successives.

De façon particulièrement préférentielle, les secteurs angulaires de coupe respectifs du premier rouleau S20_cut et du second rouleau de coupe S30_cut seront sensiblement, voire exactement, de même dimension, c'est-à-dire couvriront sensiblement, voire exactement, la même couverture angulaire.

En outre, les positions angulaires des premier et second rouleaux de coupe 20, 30 seront de préférences indexées de manière à ce que, lors de la contra-rotation synchrone desdits rouleaux de coupe 20, 30, les secteurs angulaires de coupe S20_cut, S30_cut coïncident l'un avec l'autre.

Il en ira de préférence de même pour les secteurs angulaires de libre passage S20_free, S30_free, qui présenteront de préférence des dimensions identiques, et coïncideront l'un avec l'autre lors de la rotation R20, R30 des rouleaux de coupe 20, 30.

De préférence, le secteur angulaire de coupe S20_cut, S30_cut présentera une couverture angulaire, autour de l'axe de rotation Z20, Z30 concerné, comprise entre 190 degrés et 220 degrés.

Ces plages de couverture angulaire prennent avantageusement en considération la longueur de développée nécessaire pour franchir la largeur de la bande continue W2 en réalisant une pointe de bandelette dont l'angle de coupe A cut peut atteindre toute valeur dans la plage d'angles de coupe souhaitée.

Le secteur angulaire de libre passage S20_free, S30_free correspondra de préférence au complément à 360 degrés du secteur angulaire de coupe S20_cut, S30_cut.

Par ailleurs, on notera que les premier et second rouleaux de coupe 20, 30 sont de façon préférentielle agencés de sorte à n'attaquer le front de la bande continue 2 qu'en un seul point sur la largeur W2 de ladite bande continue 2.

En d'autres termes, le système de coupe 1 a pour effet de couper la bande continue 2 à intervalles de longueur prédéterminés, pour former des bandelettes 5 qui conservent une même largeur W2 que la largeur W2 de ladite bande continue 2, et non pas de fractionner en largeur, ou « lacérer », ladite bande continue 2 en plusieurs sous-bandes qui présenteraient alors des largeurs respectives inférieures à la largeur W2 de ladite bande continue.

A cet effet, le premier rouleau de coupe 20 comprend une seule lame 21, et plus globalement, le système de coupe 1 comprend un seul jeu d'organes coupants (première lame 21 et rainure 31, par exemple), en ceci que ladite lame 21, 22, respectivement la rainure hélicoïdale 31, 32 qui lui correspond, s'étendent selon un seul filet (une seule hélice) autour de leur axe de rotation Z20, Z30 respectif.

On comprend en effet que si, au contraire, l'on prévoyait sur la même largeur de bande continue W2 plusieurs lames 21, ou plusieurs jeux d'organe coupant 21, 31, 22, 32, disposées selon plusieurs filets qui possèderaient un même pas mais seraient décalés angulairement les uns par rapport aux autres autour de leur axe de rotation Z20, Z30, ou bien encore si l'on prévoyait des organes coupants qui couvriraient plus d'un tour autour de leur axe selon un pas d'hélice inférieur à la largeur de bande W2, alors les organes coupants 21, 31, 22, 32 engageraient le front de la bande continue 2 simultanément en plusieurs points distincts répartis sur la largeur W2 de ladite bande continue 2, ce qui aurait pour effet de lacérer la bande continue 2 en plusieurs sous-bandes plus étroites.

Certes, il n'est pas exclu, dans l'absolu, de mettre en œuvre un système à plusieurs filets permettant une telle découpe de type lacération.

Toutefois, on préférera, dans certaines applications, conserver intacte la largeur W2 de la bande continue, afin de simplifier la gestion d'une pose directe, immédiatement en sortie de l'opération de coupe, des bandelettes 5 qui sont issues de ladite opération de coupe, et qui présentent ainsi la même largeur que celle W2 de la bande continue 2.

Selon un agencement préférentiel, le secteur angulaire de libre passage S20_free, S30_free pourra de préférence comprendre un méplat 28, 38, qui place la surface du premier rouleau de coupe 20, respectivement la surface du second rouleau de coupe 30, en retrait du chemin de bande T2.

On peut ainsi obtenir entre les rouleaux de coupe 20, 30, au moyen d'une solution simple à mettre en œuvre, un espace largement dégagé pour le passage de la bande continue 2, typiquement supérieur à l'épaisseur de ladite bande continue 2, ce qui limite voire évite les frottements, et donc l'abrasion, de la bande continue 2 sur les rouleaux de coupe 20, 30 pendant que la bande continue 2 défile librement entre lesdits rouleaux de coupe 20, 30.

Bien entendu, ici encore, ces considérations peuvent s'appliquer *mutatis mutandis* au premier rouleau de coupe 20 comme au second rouleau de coupe 30, et de préférence à chacun des deux rouleaux de coupe 20, 30, tel que cela est visible sur les figures 7 et 8.

On notera que l'on pourra, le cas échéant, prévoir un secteur angulaire de libre passage S20_free, S30_free dépourvu de méplat 28, 38, dès lors que la différence de rayon qui marque la transition entre le secteur angulaire de coupe S20_cut, S30_cut et le secteur angulaire de libre passage S20_free, S30_free est suffisante pour offrir un libre passage à la bande continue 2, en évitant les risques de coincement ou d'abrasion de ladite bande continue 2.

En pareil cas, en configuration de libre passage, la relative proximité des surfaces respectives du secteur de libre passage S20_free du premier rouleau de coupe 20 et du secteur de libre passage S30_free du second rouleau de coupe 30 pourront avantageusement offrir un guidage relativement précis à la bande continue 2.

L'invention porte également sur une installation 100 de fabrication de nappes de renfort 6 pour bandages, notamment pour bandages pneumatiques, tel que cela est illustré sur les figures 16, 17 et 18.

Ladite installation 100 comprend tout d'abord un dispositif 101 de préparation de bandelettes, qui réalise des bandelettes 5 en découpant lesdites bandelettes 5, au moyen d'un système de coupe 1 selon l'invention, dans une bande continue 2 dite « nappe droit fil » qui est formée d'au moins une couche de gomme 3 renforcée par une pluralité de fils de renforts 4 continus, de préférence métalliques, et de préférence monobrins, qui s'étendent parallèlement les uns aux autres selon la direction longitudinale L2 de la bande continue 2.

Ladite installation 100 comprend également une tête de pose 102 qui est agencée pour venir appliquer lesdites bandelettes 5 successivement sur un support d'assemblage 103 et abouter successivement lesdites bandelettes 5 les unes aux autres par leurs lisières 2A, 2B de sorte à constituer une nappe de renfort 6.

Le support d'assemblage 103 peut être un tapis, du genre tapis plat de convoyeur, ou bien présenter une forme de révolution, et former par exemple un tambour cylindrique ou un noyau torique.

Le cas échéant, le noyau torique présente sensiblement la forme du pneumatique auquel on souhaite intégrer la nappe de renfort 6.

Avantageusement, le système de coupe 1 selon l'invention permet de préparer successivement, en temps réel, par une coupe à la volée, les bandelettes 5 au fur et à mesure de leur pose sur le support d'assemblage 103.

Les bandelettes 5 étant produites au fur et à mesure de leur consommation, on évite ainsi tout gaspillage d'énergie ou de matière première.

En outre, la polyvalence du système de coupe 1 permet d'adapter à tout moment la longueur des bandelettes 5, ou encore le tracé de coupe T_cut de chaque front de chacune desdites bandelettes 5, et en particulier, lorsque ledit front forme un biseau rectiligne, d'adapter l'angle de coupe A_cut selon lequel ledit biseau est orienté.

Tel que cela est notamment visible sur les figures 16 et 18, la tête de pose 102 comprend de préférence un organe presseur 104, tel qu'un galet presseur 104, qui est agencé pour venir appuyer la bandelette 5 contre le support d'assemblage 103.

Selon une caractéristique préférentielle qui peut constituer une invention à part entière, le système de coupe 1 est alors agencé pour réaliser une coupe de la bandelette 5 à la volée, tandis que ladite bandelette 5 est déjà en prise sur le support d'assemblage 103 et en cours de pose sur ledit support d'assemblage 103 à une vitesse non nulle qui correspond à la vitesse d'avance V_fwd selon laquelle la bande continue 2 parcourt le chemin de bande T2 entre le premier rouleau de coupe 20 et le second rouleau de coupe 30.

Avantageusement, le recours à des organes coupants 21, 31, 22, 32 hélicoïdaux permet en effet de réaliser la coupe qui permet de séparer la bandelette 5 de la bande continue 2, et notamment de sectionner les fils de renfort 4 correspondants, quasiment sans exercer d'effort de retenue longitudinal sur la bandelette 5 qui est en cours de pose.

Ainsi, on peut réaliser simultanément d'une part la pose de la bandelette 5 sur le support d'assemblage, ce qui implique d'amener et de dérouler ladite bandelette 5 sur la longueur nécessaire à la vitesse requise par l'organe presseur 104 qui pince la bandelette 5 contre le support d'assemblage 103, et d'autre part la coupe de ladite bandelette 5, et ce sans créer de tension, d'élongation ou de déchirement sur la bandelette 5 ou sur la bande continue 2, en particulier sur la portion du chemin de bande T2 qui s'étend depuis les rouleaux de coupe 20, 30 jusqu'au point ou l'organe presseur 104 presse la bandelette 5 contre le support d'assemblage 103.

L'installation 100, et plus particulièrement le sous-ensemble formé par la tête de pose 102 et le système de coupe 1, peut donc être très compact.

En outre, ces opérations simultanées de coupe et de pose d'une même bandelette 5 sont avantageusement effectuées sans qu'il soit nécessaire de ralentir ou de stopper l'avance de la bandelette 5 pour procéder à la coupe.

L'invention permet donc d'optimiser la cadence de mise à disposition et de pose des bandelettes 5.

De préférence, le galet presseur 104 fait partie du dispositif d'entraînement 10, et définit l'axe « maître », qui conditionne la vitesse d'avance V_fwd, tandis que le synchroniseur variable 40 régule, en fonction de cette vitesse d'avance V_fwd et de l'angle de coupe A cut souhaité, la vitesse de rotation R20 du premier rouleau de coupe 20, et donc également la vitesse de rotation R30 correspondante du second rouleau de coupe 30, qui constituent les axes « esclaves » de l'asservissement.

Bien entendu, l'asservissement de la vitesse d'avance V_fwd, de la vitesse de rotation R20 des rouleaux 20, 30, et la régulation du rapport de synchronisation K qui lie ces grandeurs entre elles, pourront être réalisés au moyen de tout calculateur approprié intégré au synchroniseur variable 40.

On pourra par ailleurs envisager tout type de manipulateur 105 approprié pour positionner et déplacer la tête de pose 102 en vis-à-vis du support d'assemblage 103.

Selon une possible variante de réalisation illustrée sur la figure 16, le manipulateur 105 pourra former un robot cartésien à structure triangulaire déformable, comprenant deux bras 106, 107 montés chacun sur son propre chariot 108 mobile en translation sur un socle 109, lesdits bras 106, 107 s'articulant en pivot 110 pour former un siège 111 qui supporte une plate-forme 112 orientable en lacet et qui porte la tête de pose 102 ainsi que le système de coupe 1.

Les chariots portant les bras 106, 107 sont individuellement mobiles en translation, de préférence selon un axe de guidage orienté parallèlement à l'axe central Z103 du support d'assemblage 103, de sorte à pouvoir déplacer la base de la structure triangulaire et/ou modifier la longueur de ladite base, et ainsi déplacer le siège 111 par rapport au socle 109 et par rapport au support d'assemblage 103 dans toute position cartésienne librement choisie dans un plan de référence normal à l'axe du pivot 110.

On pourra réaliser la pose en oblique de chaque bandelette 5, selon l'angle de nappe A6 choisi, en combinant un mouvement de translation du siège 111 le long de l'axe central Z103 du support d'assemblage 103 et une rotation dudit support d'assemblage 103 autour de son axe central Z103.

Selon une autre variante de réalisation, illustrée sur les figures 17 et 18, le manipulateur 105 peut être formé par un bras robotisé 120 de type « anthropomorphe », tel qu'un bras robotisé à six axes.

La tête de pose 102, ainsi que le système de coupe 1, seront de préférence embarqués en un même sous-ensemble porté par le poignet 121 du bras robotisé 120.

De préférence, ledit bras robotisé 120 est associé à un support d'assemblage 103 présentant une forme de révolution, et, ici encore, on pourra réaliser la pose en oblique de chaque bandelette 5, selon l'angle de nappe A6 choisi, en combinant un mouvement de translation du poignet 121 le long de l'axe central Z103 du support d'assemblage 103 et une rotation dudit support d'assemblage 103 autour de son axe central Z103.

Selon encore une autre variante d'application, le système de coupe 1 pourrait être utilisé pour couper à la volée une nappe droit fil, composée d'une pluralité de bandes continues 2 qui auront été, préalablement à l'opération de coupe, aboutées l'une à l'autre parallèlement à la direction longitudinale de leurs fils de renfort 4 respectifs pour former ladite nappe droit fil.

Une telle coupe à la volée pourrait prendre place entre d'une part une station de déroulage/aboutage, au sein de laquelle des bandes continues sont déroulées puis aboutées deux à deux pour former une nappe droit fil dont la largeur frontale est supérieure à la largeur frontale individuelle W2 de chacune desdites bandes continues 2, et d'autre part une station de stockage/enroulage, au niveau de laquelle la nappe droit fil est stockée sur une bobine tampon agencée pour contenir une longueur prédéterminée de ladite nappe droit fil.

La coupe à la volée interviendrait alors lorsque la quantité de nappe droit fil enroulée sur la bobine tampon atteint la longueur prédéterminée souhaitée.

Ici encore, le recours à un système de coupe 1 selon l'invention permet de réaliser, à l'aide d'un système 1 compact, une coupe à la volée, alors que la nappe droit fil est déjà en prise sur la bobine tampon, en raison des enroulements déjà effectués, et que ladite nappe droit fil est animée d'une vitesse d'avance V_fwd non nulle.

L'invention porte enfin sur un procédé selon l'une ou l'autre des caractéristiques décrites dans ce qui précède.

Plus particulièrement, l'invention concerne un procédé de fabrication de bandelettes 5 au cours duquel on réalise des bandelettes 5 successives par découpe d'une bande dite « bande continue » 2 qui s'étend en longueur selon une direction dite « direction longitudinale » L2 et en largeur W2 entre une première lisière 2A et une seconde lisière 2B,

- en acheminant ladite bande continue 2, à une vitesse déterminée dite « vitesse d'avance » V_fwd qui est orientée selon la direction longitudinale L2 de ladite bande continue 2, le long d'un chemin de bande T2 qui passe entre un premier rouleau de coupe 20, pourvu d'une première lame hélicoïdale 21, et un second rouleau de coupe 30 contrarotatifs,

- en animant ledit premier rouleau de coupe 20 d'un premier mouvement de rotation R20, selon une vitesse de rotation choisie, autour d'un premier axe de rotation Z20 orienté transversalement au chemin de bande T2, de préférence perpendiculairement audit chemin de bande T2, de sorte à parcourir et couper toute la largeur W2 de ladite bande continue 2, depuis la première lisière 2A jusqu'à la seconde lisière 2B,

- et en pilotant au moyen d'un synchroniseur variable 40 la vitesse d'avance V_fwd conférée à la bande continue 2 ainsi que la vitesse de rotation R20 du premier rouleau de coupe 20, de manière à pouvoir sélectionner et modifier le rapport, dit « rapport de synchronisation » K, entre la vitesse de rotation R20 du premier rouleau de coupe 20 et la vitesse d'avance V_fwd, de préférence non nulle, de la bande continue 2, de manière à pouvoir ajuster l'angle dit « angle de coupe » A cut selon lequel on oriente la coupe de la bande continue 2 par rapport à la direction longitudinale L2 de ladite bande continue 2.

Comme indiqué plus haut, ceci revient, pour toute vitesse d'avance V_fwd considérée, notamment pour toute vitesse d'avance V_fwd non nulle considérée, à sélectionner, et à pouvoir modifier, dans une plage de valeurs prédéterminées, le rapport entre d'une part la vitesse dite « vitesse relative de coupe » V_rel qui résulte de la vitesse de rotation du premier rouleau 20 de coupe et que décrit, transversalement à la direction longitudinale L2 de la bande continue, le point de la première lame hélicoïdale 21 qui est en prise avec la bande continue à l'instant considéré pendant l'opération de coupe, et d'autre part la vitesse d'avance V_fwd, et ce de manière à pouvoir ajuster l'angle dit « angle de coupe » A cut selon lequel on oriente, à l'instant considéré, la direction de coupe de la bande continue 2 par rapport à la direction longitudinale L2 de ladite bande continue.

De préférence, au cours de ce procédé, tel que cela est illustré sur la figure 11, on réalise la coupe de la bandelette 5 selon un tracé de coupe T_cut effectif qui est rectiligne et orienté selon un angle de coupe dit « angle de coupe nominal » A_cut2 prédéterminé par rapport à la direction longitudinale L2 de la bande continue 2, auquel correspond géométriquement un rapport de synchronisation dit « rapport de synchronisation nominal » K2, en appliquant successivement : un premier rapport de synchronisation dit « rapport de synchronisation d'attaque » K1 qui est strictement supérieur, en valeur absolue, au rapport de synchronisation nominal K2, pour engager et franchir la première lisière 2A, puis un second rapport de synchronisation K2, inférieur au premier rapport de synchronisation et égal au rapport de synchronisation nominal K2, puis, à l'approche de la seconde lisière 2B et lors du franchissement de ladite seconde lisière, un troisième rapport de synchronisation dit « rapport de synchronisation de fuite » K3 qui est strictement inférieur, en valeur absolue, au rapport de synchronisation nominal K2.

De la sorte, on peut compenser les effets de bord et obtenir un tracé de coupe résultant qui est effectivement rectiligne.

Bien entendu, l'invention n'est nullement limitée aux seules variantes de réalisation susmentionnées, l'homme du métier étant notamment à même d'isoler ou de combiner librement entre elles l'une ou l'autre des caractéristiques décrites dans ce qui précède, ou de leur substituer des équivalents.

## Revendications

1. Système de coupe (1) destiné à couper une bande dite «bande continue» (2) qui s'étend en longueur selon une direction dite « direction longitudinale » (L2) et en largeur (W2) entre une première lisière (2A) et une seconde lisière (2B), ledit système de coupe comprenant :

   - un dispositif d'entraînement (10) agencé pour entraîner la bande continue (2) le long d'un chemin de bande (T2) selon une vitesse dite « vitesse d'avance » (V_fwd) qui est orientée selon la direction longitudinale (L2) de ladite bande continue,
   - un premier rouleau de coupe (20), qui est monté de sorte à pouvoir être entraîné dans un premier mouvement de rotation (R20), selon une vitesse de rotation choisie, autour d'un premier axe de rotation (Z20) orienté transversalement au chemin de bande (T2), de préférence perpendiculairement audit chemin de bande, ledit premier rouleau de coupe étant pourvu d'une première lame hélicoïdale (21) qui s'étend en hélice autour dudit premier axe de rotation (Z20), ledit système étant **caractérisé par**
   - un second rouleau de coupe (30), qui est monté en rotation autour d'un second axe de rotation (Z30), de préférence parallèle au premier axe de rotation (Z20), selon un second mouvement de rotation (R30) de sens contraire au mouvement de rotation (R20) du premier rouleau de coupe (20), et qui est agencé de sorte à pouvoir, lorsque la bande continue (2) est engagée entre lesdits premier et second rouleaux de coupe (20, 30), coopérer avec la première lame hélicoïdale (21) pour couper ladite bande continue (2) sur toute la largeur (W2) de ladite bande continue, depuis la première lisière (2A) jusqu'à la seconde lisière (2B), et
   - un synchroniseur variable (40), qui permet de sélectionner et de modifier le rapport, dit « rapport de synchronisation » (K), entre la vitesse de rotation (R20) du premier rouleau de coupe et la vitesse d'avance (V_fwd) de la bande continue (2), de manière à pouvoir ajuster l'angle dit « angle de coupe » (A cut) selon lequel on oriente la coupe de la bande continue (2) par rapport à la direction longitudinale (L2) de ladite bande continue (2).

2. Système de coupe selon la revendication 1 **caractérisé en ce que** le synchroniseur variable (40) comprend au moins une loi de synchronisation (L40) qui modifie dynamiquement le rapport de synchronisation (K) pendant que la première lame (21) est en prise sur la bande continue (2), entre la première lisière (2A) et la seconde lisière (2B), de sorte à fixer successivement plusieurs rapports de synchronisation de valeurs différentes (K1, K2, K3) sur une même largeur de coupe (W2) de la bande continue (2).

3. Système de coupe selon la revendication 2 **caractérisé en ce que** la première lame (21) débute la coupe par la première lisière (2A), dite « bord d'attaque », et termine la coupe par la seconde lisière (2B), dite « bord de fuite », et **en ce que** la loi de synchronisation (L40) adapte le rapport de synchronisation (K) pour compenser des effets dits « effets de bord » qui sont liés au comportement de déformation élastique de la bande continue (2) au niveau de ses lisières (2A, 2B), en appliquant un rapport de synchronisation majoré (K1) au niveau du bord d'attaque (2A) et/ou respectivement un rapport de synchronisation minoré (K3) au niveau du bord de fuite (2B), de préférence inférieur au rapport de synchronisation majoré utilisé au niveau du bord d'attaque.

4. Système de coupe selon la revendication 2 ou 3 **caractérisé en ce que** la loi de synchronisation (L40) est définie de manière à permettre l'obtention d'un tracé de coupe (T_cut) effectif rectiligne qui forme, par rapport à la direction longitudinale (L2) de la bande continue (2), un angle de coupe dit « angle de coupe nominal » (A_cut2) prédéterminé, auquel correspond géométriquement un rapport de synchronisation dit « rapport de synchronisation nominal » (K2), et **en ce que** ladite loi de synchronisation (L40) comprend, de manière à pouvoir compenser au moins en partie les déformations de la bande continue (2) induites par l'opération de coupe au voisinage des premières et seconde lisières (2A, 2B), au moins trois phase successives :

    - une première phase (Ph1) dite « phase d'attaque », selon laquelle la loi de synchronisation (L40) applique, lorsque la première lame (21) atteint et franchit la première lisière (2A) formant un bord d'attaque, un premier rapport de synchronisation dit « rapport de synchronisation d'attaque » (K1) qui est strictement supérieur au rapport de synchronisation nominal (K2),
    - puis une seconde phase (Ph2) dite « phase de coupe nominale », selon laquelle la loi de synchronisation réduit le rapport de synchronisation pour appliquer un second rapport de synchronisation (K2) égal au rapport de synchronisation nominal correspondant à l'angle de coupe nominal (A_cut2) visé,
    - puis une troisième phase (Ph3) dite « phase de fuite », selon laquelle la loi de synchronisation réduit encore le rapport de synchronisation de manière à appliquer, à l'approche de la seconde lisière (2B) et lors du franchissement de ladite seconde lisière formant un bord de fuite, un troisième rapport de synchronisation (K3) dit « rapport de synchronisation de fuite » qui est strictement inférieur au rapport de synchronisation nominal (K2).

5. Système de coupe selon l'une des revendications précédentes **caractérisé en ce que** la première lame (21) couvre axialement, le long du premier axe de rotation (Z20) du premier rouleau de coupe (20, une distance, dite « largeur utile de lame » (W21), qui est strictement supérieure à la largeur (W2) hors-tout de la bande continue (2), de sorte à prévoir d'une part, en débordement de la première lisière (2A) selon ledit premier axe de rotation, un dégagement latéral amont (WA), qui permet au synchroniseur variable (40) de porter la vitesse de rotation (R20) du premier rouleau de coupe à une valeur souhaitée, correspondant au rapport de synchronisation (K, K1) souhaité, avant que la première lame (21) n'entre au contact de la bande continue (2) au niveau de la première lisière (2A) de ladite bande continue, et d'autre part, en débordement de la seconde lisière (2B) selon ledit premier axe de rotation (Z20), un dégagement latéral aval (WB), qui permet de poursuivre, au-delà de la seconde lisière (2B), la première rotation (R20), et donc le cheminement de la première lame (21) qui correspond à l'action de coupe exercée par ladite première lame, de telle sorte que le rapport de synchronisation (K) reste pilotable au moins jusqu'à l'instant où une bandelette (5) se détache complètement de la bande continue (2).

6. Système de coupe selon l'une des revendications précédentes, **caractérisé en ce que** l'un au moins des premier et second rouleaux de coupe (20, 30), de préférence le second rouleau de coupe (30), comprend un épaulement de guidage (33) qui est agencé pour former une butée latérale à l'encontre de la première lisière (2A) ou de la seconde lisière (2B).

7. Système de coupe selon l'une des revendications précédentes **caractérisé en ce qu'**il est destiné à couper des bandes continues comprenant des fils de renforts (4) continus agencés parallèlement aux première et second lisières (2A, 2B) selon un pas (d4) prédéterminé, et **en ce que** l'un au moins des premier et second rouleaux de coupe (20, 30), de préférence le second rouleau de coupe (30), comprend une surface d'appui cylindrique (36), centrée sur l'axe de rotation (Z30) dudit rouleau de coupe, sur laquelle la bande continue (2) vient prendre appui, et qui comporte une série de gorges (37) annulaires, orientées selon la direction longitudinale (L2) de la bande continue (2), et dont le pas (d37) de répartition axiale correspond de préférence au pas (d4) des fils de renfort (4), de sorte que lesdites gorges (37) contribuent au maintien latéral de la bande continue (2) pendant l'opération de coupe.

8. Système de coupe selon l'une des revendications précédentes **caractérisé en ce qu'**il est destiné à couper des bandes continues (2) comprenant des fils de renforts (4) continus agencés parallèlement aux première et second lisières (2A, 2B) selon un pas (d4) prédéterminé, et **en ce que** la première lame (21) comprend des stries (27), orientées selon la direction longitudinale (L2) de la bande continue, et de préférence espacées selon un pas (d27) de répartition axiale qui correspond au pas (d4) des fils de renfort, de sorte que lesdites stries (27) contribuent au maintien latéral de la bande continue (2) pendant l'opération de coupe.

9.  Système de coupe selon l'une des revendications précédentes **caractérisé en ce que** le second rouleau de coupe (30) présente une rainure hélicoïdale (31) de forme conjuguée à la première lame (21).

10. Système de coupe selon l'une des revendications précédentes **caractérisé en ce que** la première lame (21) couvre moins d'un pas hélicoïdal autour du premier rouleau de coupe (20), de manière à ce que ledit premier rouleau de coupe (20) présente, en azimut autour du premier axe de rotation, d'une part un secteur angulaire de coupe (S20_cut), occupé par la première lame (21), et d'autre part un secteur angulaire de libre passage (S20_free), qui est dépourvu de lame, et qui est agencé pour autoriser la bande continue (2) à défiler entre les premier et second rouleau de coupe (20, 30) sans faire subir d'action de coupe à ladite bande continue (2).

11. Système de coupe selon la revendication 10 **caractérisé en ce que** le secteur angulaire de libre passage (S20_free) comprend un méplat (28), qui place la surface du premier rouleau de coupe (20) en retrait du chemin de bande (T2).

12. Installation (100) de fabrication de nappes de renfort pour bandages, notamment pour bandages pneumatiques, ladite installation comprenant d'une part un dispositif (101) de préparation de bandelettes, qui réalise des bandelettes (5) en découpant lesdites bandelettes, au moyen d'un système de coupe (1) selon l'une des revendications 1 à 11, dans une bande continue (2) dite « nappe droit fil » qui est formée d'au moins une couche de gomme (3) renforcée par une pluralité de fils de renforts (4) continus, de préférence métalliques, qui s'étendent parallèlement les uns aux autres selon la direction longitudinale (L2) de la bande continue (2), et d'autre part une tête de pose (102) agencée pour venir appliquer lesdites bandelettes (5) successivement sur un support d'assemblage (103), tel qu'un tapis, un tambour cylindrique ou un noyau torique, et abouter successivement lesdites bandelettes (5) les unes aux autres par leurs lisières (2A, 2B) de sorte à constituer une nappe de renfort (6).

13. Installation selon la revendication 12 **caractérisée en ce que** la tête de pose (102) comprend un organe presseur (104), tel qu'un galet presseur, agencé pour venir appuyer la bandelette (5) contre le support d'assemblage (103, et **en ce que** le système de coupe (1) est agencé pour réaliser une coupe de la bandelette (5) à la volée, tandis que ladite bandelette est déjà en prise sur le support d'assemblage (103) et en cours de pose sur ledit support d'assemblage (103) à une vitesse non nulle qui correspond à la vitesse d'avance (V_fwd) selon laquelle la bande continue (2) parcourt le chemin de bande (T2) entre le premier et le second rouleau de coupe (20, 30).

14. Procédé de fabrication de bandelettes au cours duquel on réalise des bandelettes (5) successives par découpe d'une bande dite « bande continue » (2) qui s'étend en longueur selon une direction dite « direction longitudinale » (L2) et en largeur (W2) entre une première lisière (2A) et une seconde lisière (2B),

    - en acheminant ladite bande continue (2), à une vitesse déterminée dite « vitesse d'avance » (V_fwd) qui est orientée selon la direction longitudinale de ladite bande continue, le long d'un chemin de bande (T2) qui passe entre un premier rouleau de coupe (20), pourvu d'une première lame hélicoïdale (21), et un second rouleau de coupe (30) contrarotatifs,
    - en animant ledit premier rouleau de coupe (20) d'un premier mouvement de rotation (R20), selon une vitesse de rotation choisie, autour d'un premier axe de rotation (Z20) orienté transversalement au chemin de bande (T2), de préférence perpendiculairement audit chemin de bande (T2), de sorte à parcourir et couper toute la largeur (W2) de ladite bande continue (2), depuis la première lisière (2A) jusqu'à la seconde lisière (2B),
    - et en pilotant au moyen d'un synchroniseur variable (40) la vitesse d'avance (V_fwd) conférée à la bande continue ainsi que la vitesse de rotation (R20) du premier rouleau de coupe (20), de manière à pouvoir sélectionner et modifier le rapport, dit « rapport de synchronisation » (K), entre la vitesse de rotation (R20) du premier rouleau de coupe (20) et la vitesse d'avance (V_fwd) de la bande continue (2), de manière à pouvoir ajuster l'angle dit « angle de coupe » (A_cut) selon lequel on oriente la coupe de la bande continue (2) par rapport à la direction longitudinale (L2) de ladite bande continue.

15. Procédé selon la revendication 14 **caractérisé en ce que** l'on réalise la coupe de la bandelette (5) selon un tracé de coupe (T_cut) effectif qui est rectiligne et orienté selon un angle de coupe dit « angle de coupe nominal » (A_cut2) prédéterminé par rapport à la direction longitudinale (L2) de la bande continue, auquel correspond géométriquement un rapport de synchronisation dit « rapport de synchronisation nominal » (K2), en appliquant successivement : un premier rapport de synchronisation dit « rapport de synchronisation d'attaque » (K1) qui est strictement supérieur, en valeur absolue, au rapport de synchronisation nominal (K2), pour engager et franchir la première lisière (2A), puis un second rapport de synchronisation (K2), inférieur au premier rapport de synchronisation (K1) et égal au rapport de synchronisation nominal (K2), puis, à l'approche de la seconde lisière (2B) et lors du franchissement de ladite seconde lisière, un troisième rapport de synchronisation dit « rapport de synchronisation de fuite » (K3) qui est strictement inférieur, en valeur absolue, au rapport de synchronisation nominal (K2).

**Patentansprüche**

1. Schneidsystem (1), welches dazu bestimmt ist, ein "endloses Band" (2) genanntes Band zu zerschneiden, welches sich in der Länge in einer "Längsrichtung" (L2) genannten Richtung und in der Breite (W2) zwischen einer ersten Kante (2A) und einer zweiten Kante (2B) erstreckt, wobei das Schneidsystem umfasst:

   - eine Antriebsvorrichtung (10), die dazu eingerichtet ist, das endlose Band (2) entlang eines Bandweges (T2) mit einer "Vorschubgeschwindigkeit" (V_fwd) genannten Geschwindigkeit anzutreiben, welche in der Längsrichtung (L2) des endlosen Bandes ausgerichtet ist,
   - eine erste Schneidwalze (20), welche so angebracht ist, dass sie in einer ersten Drehbewegung (R20) mit einer gewählten Drehgeschwindigkeit um eine erste Drehachse (Z20) angetrieben werden kann, die quer zum Bandweg (T2), vorzugsweise senkrecht zu diesem Bandweg, ausgerichtet ist, wobei die erste Schneidwalze mit einer ersten schraubenförmigen Klinge (21) versehen ist, welche sich schraubenlinienförmig um die erste Drehachse (Z20) erstreckt, wobei das System **gekennzeichnet ist durch**
   - eine zweite Schneidwalze (30), welche um eine zweite Drehachse (Z30), die vorzugsweise zur ersten Drehachse (Z20) parallel ist, gemäß einer zweiten Drehbewegung (R30) mit einer zur Drehbewegung (R20) der ersten Schneidwalze (20) entgegengesetzten Richtung drehbar gelagert ist und welche so eingerichtet ist, dass sie, wenn das endlose Band (2) zwischen der ersten und der zweiten Schneidwalze (20, 30) aufgenommen ist, mit der ersten schraubenförmigen Klinge (21) zusammenwirken kann, um das endlose Band (2) auf der gesamten Breite (W2) dieses endlosen Bandes von der ersten Kante (2A) bis zur zweiten Kante (2B) zu zerschneiden, und
   - einen variablen Synchronisator (40), welcher es ermöglicht, das "Synchronisationsverhältnis" (K) genannte Verhältnis zwischen der Drehgeschwindigkeit (R20) der ersten Schneidwalze und der Vorschubgeschwindigkeit (V_fwd) des endlosen Bandes (2) zu wählen und zu ändern, um so den "Schneidwinkel" (A_cut) genannten Winkel, in welchem der Schnitt des endlosen Bandes (2) bezüglich der Längsrichtung (L2) des endlosen Bandes (2) ausgerichtet wird, einstellen zu können.

2. Schneidsystem nach Anspruch 1, **dadurch gekennzeichnet, dass** der variable Synchronisator (40) mindestens eine Synchronisationsfunktion (L40) umfasst, welche das Synchronisationsverhältnis (K), während sich die erste Klinge (21) mit dem endlosen Band (2) in Eingriff befindet, zwischen der ersten Kante (2A) und der zweiten Kante (2B) dynamisch ändert, um nacheinander mehrere Synchronisationsverhältnisse mit unterschiedlichen Werten (K1, K2, K3) auf ein und derselben Schnittbreite (W2) des endlosen Bandes (2) festzulegen.

3. Schneidsystem nach Anspruch 2, **dadurch gekennzeichnet, dass** die erste Klinge (21) den Schnitt mit der "Eintrittsrand" genannten ersten Kante (2A) beginnt und mit der "Austrittsrand" genannten zweiten Kante (2B) beendet, und dadurch, dass die Synchronisationsfunktion (L40) das Synchronisationsverhältnis (K) anpasst, um "Randeffekte" genannte Effekte zu kompensieren, welche mit dem elastischen Verformungsverhalten des endlosen Bandes (2) an seinen Kanten (2A, 2B) zusammenhängen, indem sie ein vergrößertes Synchronisationsverhältnis (K1) am Eintrittsrand (2A) anwendet, und/oder ein verkleinertes Synchronisationsverhältnis (K3) am Austrittsrand (2B), das vorzugsweise kleiner als das am Eintrittsrand verwendete vergrößerte Synchronisationsverhältnis ist.

4. Schneidsystem nach Anspruch 2 oder 3, **dadurch gekennzeichnet, dass** die Synchronisationsfunktion (L40) so definiert ist, dass sie das Erzielen eines geraden effektiven Schnittverlaufs (T_cut) ermöglicht, welcher bezüglich der Längsrichtung (L2) des endlosen Bandes (2) einen vorbestimmten, "Nennschneidwinkel" (A cut2) genannten Schneidwinkel bildet, welchem geometrisch ein "Nennsynchronisationsverhältnis" (K2) genanntes Synchronisationsverhältnis entspricht, und dadurch, dass die Synchronisationsfunktion (L40), um die durch den Schneidvorgang in der Nähe der ersten und der zweiten Kante (2A, 2B) hervorgerufenen Verformungen des endlosen Bandes (2) wenigstens teilweise kompensieren zu können, mindestens drei aufeinander folgende Phasen umfasst:

   - eine "Eintrittsphase" genannte erste Phase (Ph1), gemäß welcher die Synchronisationsfunktion (L40), wenn die erste Klinge (21) die einen Eintrittsrand bildende erste Kante (2A) erreicht und überquert, ein "Eintrittssynchronisationsverhältnis" (K1) genanntes erstes Synchronisationsverhältnis anwendet, welches streng größer als das Nennsynchronisationsverhältnis (K2) ist,

- danach eine "Nennschneidphase" genannte zweite Phase (Ph2), gemäß welcher die Synchronisationsfunktion das Synchronisationsverhältnis verkleinert, um ein zweites Synchronisationsverhältnis (K2) anzuwenden, das gleich dem Nennsynchronisationsverhältnis ist, das dem angestrebten Nennschneidwinkel (A_cut2) entspricht,
- danach eine "Austrittsphase" genannte dritte Phase (Ph3), gemäß welcher die Synchronisationsfunktion das Synchronisationsverhältnis noch weiter verkleinert, um bei der Annäherung an die zweite Kante (2B) und bei der Überquerung dieser einen Austrittsrand bildenden zweiten Kante ein "Austrittssynchronisationsverhältnis" genanntes drittes Synchronisationsverhältnis (K3) anzuwenden, welches streng kleiner als das Nennsynchronisationsverhältnis (K2) ist.

5. Schneidsystem nach einem der vorhergehenden Ansprüche, **dadurch gekennzeichnet, dass** die erste Klinge (21) axial, entlang der ersten Drehachse (Z20) der ersten Schneidwalze (20), einen "Nutzbreite der Klinge" (W21) genannten Abstand überdeckt, welcher streng größer als die Gesamtbreite (W2) des endlosen Bandes (2) ist, um einerseits in dem entlang der ersten Drehachse über die erste Kante (2A) hinausragenden Bereich einen vorgelagerten seitlichen Nichteingriff (WA) vorzusehen, welcher dem variablen Synchronisator (40) ermöglicht, die Drehgeschwindigkeit (R20) der ersten Schneidwalze auf einen gewünschten Wert einzustellen, der dem gewünschten Synchronisationsverhältnis (K, K1) entspricht, bevor die erste Klinge (21) mit dem endlosen Band (2) an der ersten Kante (2A) dieses endlosen Bandes in Kontakt kommt, und andererseits in dem entlang der ersten Drehachse (Z20) über die zweite Kante (2B) hinausragenden Bereich einen nachgelagerten seitlichen Nichteingriff (WB) vorzusehen, welcher ermöglicht, jenseits der zweiten Kante (2B) die erste Drehung (R20) und damit den Weg der ersten Klinge (21), welcher der von der ersten Klinge ausgeübten Schneidwirkung entspricht, fortzusetzen, derart, dass das Synchronisationsverhältnis (K) mindestens bis zu dem Zeitpunkt steuerbar bleibt, zu dem sich ein Streifen (5) vollständig von dem endlosen Band (2) löst.

6. Schneidsystem nach einem der vorhergehenden Ansprüche, **dadurch gekennzeichnet, dass** die erste und/oder die zweite Schneidwalze (20, 30), vorzugsweise die zweite Schneidwalze (30), einen Führungsbund (33) umfasst, welcher dazu eingerichtet ist, einen seitlichen Anschlag gegen die erste Kante (2A) oder die zweite Kante (2B) zu bilden.

7. Schneidsystem nach einem der vorhergehenden Ansprüche, **dadurch gekennzeichnet, dass** es dazu bestimmt ist, endlose Bänder zu zerschneiden, die endlose Verstärkungsfäden (4) umfassen, die mit einem bestimmten Schritt (d4) parallel zur ersten und zweiten Kante (2A, 2B) angeordnet sind, und dadurch, dass mindestens eine der ersten und der zweiten Schneidwalze (20, 30), vorzugsweise die zweite Schneidwalze (30), eine um die Drehachse (Z30) der Schneidwalze zentrierte zylindrische Auflagefläche (36) umfasst, an welcher das endlose Band (2) zur Anlage kommt und welche eine Reihe von ringförmigen Rillen (37) aufweist, die in der Längsrichtung (L2) des endlosen Bandes (2) ausgerichtet sind und deren Schritt (d37) der axialen Verteilung vorzugsweise dem Schritt (d4) der Verstärkungsfäden (4) entspricht, so dass die Rillen (37) zum seitlichen Halten des endlosen Bandes (2) während des Schneidvorgangs beitragen.

8. Schneidsystem nach einem der vorhergehenden Ansprüche, **dadurch gekennzeichnet, dass** es dazu bestimmt ist, endlose Bänder (2) zu zerschneiden, die endlose Verstärkungsfäden (4) umfassen, die mit einem bestimmten Schritt (d4) parallel zur ersten und zweiten Kante (2A, 2B) angeordnet sind, und dadurch, dass die erste Klinge (21) Riefen (27) umfasst, die in der Längsrichtung (L2) des endlosen Bandes ausgerichtet sind und vorzugsweise gemäß einem Schritt (d27) der axialen Verteilung beabstandet sind, welcher dem Schritt (d4) der Verstärkungsfäden entspricht, so dass die Riefen (27) zum seitlichen Halten des endlosen Bandes (2) während des Schneidvorgangs beitragen.

9. Schneidsystem nach einem der vorhergehenden Ansprüche, **dadurch gekennzeichnet, dass** die zweite Schneidwalze (30) eine schraubenlinienförmige Nut (31) mit einer der ersten Klinge (21) entsprechenden Form aufweist.

10. Schneidsystem nach einem der vorhergehenden Ansprüche, **dadurch gekennzeichnet, dass** die erste Klinge (21) weniger als eine Steigungshöhe um die erste Schneidwalze (20) bedeckt, so dass die erste Schneidwalze (20) in Azimutrichtung um die erste Drehachse einerseits einen Schneidwinkelsektor (S20_cut) aufweist, der von der ersten Klinge (21) eingenommen wird, und andererseits einen Winkelsektor des freien Durchgangs (S20_free), welcher nicht mit der Klinge versehen ist und welcher dazu eingerichtet ist zu erlauben, dass das endlose Band (2) zwischen der ersten und der zweiten Schneidwalze (20, 30) durchläuft, ohne dass das endlose Band (2) einem Schneidvorgang unterzogen wird.

11. Schneidsystem nach Anspruch 10, **dadurch gekennzeichnet, dass** der Winkelsektor des freien Durchgangs

**EP 3 880 455 B1**

(S20_free) eine Abflachung (28) umfasst, welche die Oberfläche der ersten Schneidwalze (20) bezüglich des Bandweges (T2) zurückversetzt.

12. Anlage (100) zur Herstellung von Verstärkungslagen für Reifen, insbesondere für Luftreifen, wobei die Anlage einerseits eine Vorrichtung (101) zur Bereitstellung von Streifen umfasst, welche Streifen (5) herstellt, indem sie die Streifen mittels eines Schneidsystems (1) nach einem der Ansprüche 1 bis 11 von einem "Lage mit geraden Fäden" genannten endlosen Band (2) abschneidet, welches von mindestens einer Gummischicht (3) gebildet wird, die mit mehreren, vorzugsweise metallischen endlosen Verstärkungsfäden (4) verstärkt ist, welche sich parallel zueinander in der Längsrichtung (L2) des endlosen Bandes (2) erstrecken, und andererseits einen Anbringkopf (102), der dazu eingerichtet ist, die Streifen (5) nacheinander auf einem Montageträger (103) anzubringen, wie etwa einem Laufband, einer zylindrischen Trommel oder einem Ringkern, und die Streifen (5) nacheinander mit ihren Kanten (2A, 2B) aneinander anzulegen, um eine Verstärkungslage (6) zu bilden.

13. Anlage nach Anspruch 12, **dadurch gekennzeichnet, dass** der Anbringkopf (102) ein Andruckorgan (104) umfasst, wie etwa eine Andruckrolle, das dazu eingerichtet ist, den Streifen (5) an den Montageträger (103) anzudrücken, und dadurch, dass das Schneidsystem (1) dazu eingerichtet ist, ein fliegendes Schneiden des Streifens (5) durchzuführen, während sich der Streifen bereits in Eingriff mit dem Montageträger (103) befindet und gerade auf dem Montageträger (103) mit einer von null verschiedenen Geschwindigkeit angebracht wird, welche der Vorschubgeschwindigkeit (V fwd) entspricht, mit welcher das endlose Band (2) den Bandweg (T2) zwischen der ersten und der zweiten Schneidwalze (20, 30) durchläuft.

14. Verfahren zur Herstellung von Streifen, bei welchem aufeinander folgende Streifen (5) durch Zerschneiden eines "endloses Band" (2) genannten Bandes hergestellt werden, welches sich in der Länge in einer "Längsrichtung" (L2) genannten Richtung und in der Breite (W2) zwischen einer ersten Kante (2A) und einer zweiten Kante (2B) erstreckt,

   - indem das endlose Band (2) mit einer "Vorschubgeschwindigkeit" (V_fwd) genannten Geschwindigkeit, welche in der Längsrichtung des endlosen Bandes ausgerichtet ist, entlang eines Bandweges (T2) bewegt wird, welcher zwischen einer ersten Schneidwalze (20), die mit einer ersten schraubenförmigen Klinge (21) versehen ist, und einer zweiten Schneidwalze (30), die gegenläufig rotieren, verläuft,
   - indem die erste Schneidwalze (20) in eine erste Drehbewegung (R20) mit einer gewählten Drehgeschwindigkeit um eine erste Drehachse (Z20) versetzt wird, die quer zum Bandweg (T2), vorzugsweise senkrecht zu diesem Bandweg (T2), ausgerichtet ist, um die gesamte Breite (W2) des endlosen Bandes (2) von der ersten Kante (2A) bis zur zweiten Kante (2B) zu durchlaufen und zu schneiden,
   - und indem mittels eines variablen Synchronisators (40) die Vorschubgeschwindigkeit (V_fwd), die dem endlosen Band verliehen wird, sowie die Drehgeschwindigkeit (R20) der ersten Schneidwalze (20) gesteuert werden, um so das "Synchronisationsverhältnis" (K) genannte Verhältnis zwischen der Drehgeschwindigkeit (R20) der ersten Schneidwalze (20) und der Vorschubgeschwindigkeit (V_fwd) des endlosen Bandes (2) wählen und ändern zu können, um so den "Schneidwinkel" (A_cut) genannten Winkel, in welchem der Schnitt des endlosen Bandes (2) bezüglich der Längsrichtung (L2) des endlosen Bandes ausgerichtet wird, einstellen zu können.

15. Verfahren nach Anspruch 14, **dadurch gekennzeichnet, dass** das Zerschneiden des Streifens (5) gemäß einem effektiven Schnittverlauf (T cut) durchgeführt wird, welcher gerade und bezüglich der Längsrichtung (L2) des endlosen Bandes in einem vorbestimmten, "Nennschneidwinkel" (A_cut2) genannten Schneidwinkel ausgerichtet ist, welchem geometrisch ein "Nennsynchronisationsverhältnis" (K2) genanntes Synchronisationsverhältnis entspricht, indem nacheinander angewendet werden: ein "Eintrittssynchronisationsverhältnis" (K1) genanntes erstes Synchronisationsverhältnis, welches dem absoluten Betrag nach streng größer als das Nennsynchronisationsverhältnis (K2) ist, um an der ersten Kante (2A) anzugreifen und sie zu überqueren, danach ein zweites Synchronisationsverhältnis (K2), das kleiner als das erste Synchronisationsverhältnis (K1) und gleich dem Nennsynchronisationsverhältnis (K2) ist, danach, bei der Annäherung an die zweite Kante (2B) und bei der Überquerung dieser zweiten Kante, ein "Austrittssynchronisationsverhältnis" (K3) genanntes drittes Synchronisationsverhältnis, welches dem absoluten Betrag nach streng kleiner als das Nennsynchronisationsverhältnis (K2) ist.

**Claims**

1. A cutting system (1) for cutting a strip termed a "continuous strip" (2) which extends lengthwise in a direction termed a "longitudinal direction" (L2) and widthwise (W2) between a first edge (2A) and a second edge (2B), said cutting system comprising:

- a drive device (10) adapted to drive the continuous strip (2) along a strip path (T2) at a speed termed a "forward speed" (V_fwd) that is oriented in the longitudinal direction (L2) of said continuous strip,
- a first cutting roller (20) that is mounted so as to be able to be driven in a first movement in rotation (R20) at a chosen rotation speed about a first rotation axis (Z20) oriented transversely to the strip path (T2), preferably perpendicularly to said strip path, said first cutting roller being provided with a first helical blade (21) that extends helically around said first rotation axis (Z20),

said system being **characterized by**:

- a second cutting roller (30) that is mounted to rotate about a second rotation axis (Z30), preferably parallel to the first rotation axis (Z20), in a second movement in rotation (R30) in the opposite direction to the movement in rotation (R20) of the first cutting roller (20) and that is adapted to be able, when the continuous strip (2) is engaged between said first and second cutting rollers (20, 30), to cooperate with the first helical blade (21) to cut said continuous strip (2) over all the width (W2) of said continuous strip from the first edge (2A) to the second edge (2B), and
- a variable synchronizer (40) which makes it possible to select and to modify the ratio termed the "synchronization ratio" (K) between the rotation speed (R20) of the first cutting roller and the forward speed (V_fwd) of the continuous strip (2) in such a manner as to be able to adjust the angle termed the "cutting angle" (A cut) at which the cut in the continuous strip (2) is oriented relative to the longitudinal direction (L2) of said continuous strip (2).

2. Cutting system according to Claim 1 **characterized in that** the variable synchronizer (40) employs at least one synchronization law (L40) that dynamically modifies the synchronization ratio (K) while the first blade (21) is engaged on the continuous strip (2), between the first edge (2A) and the second edge (2B), so as successively to fix a plurality of synchronization ratios (K1, K2, K3) with different values over the same cutting width (W2) of the continuous strip (2).

3. Cutting system according to Claim 2 **characterized in that** the first blade (21) starts the cut at the first edge (2A), termed the "leading edge", and ends the cut at the second edge (2B), termed the "trailing edge", and **in that** the synchronization law (L40) adapts the synchronization ratio (K) to compensate effects termed "edge effects" that are linked to the elastic deformation behaviour of the continuous strip (2) at the level of its edges (2A, 2B) by applying an increased synchronization ratio (K1) at the level of the leading edge (2A) and/or respectively a reduced synchronization ratio (K3) at the level of the trailing edge (2B), preferably less than the increased synchronization ratio used at the level of the leading edge.

4. Cutting system according to Claim 2 or 3 **characterized in that** the synchronization law (L40) is defined in such a manner as to enable a rectilinear actual cutting line (T_cut) to be obtained that forms a predetermined cutting angle termed the "nominal cutting angle" (A_cut2) relative to the longitudinal direction (L2) of the continuous strip (2), to which there geometrically corresponds a synchronization ratio termed the "nominal synchronization ratio " (K2), and **in that** said synchronization law (L40) comprises, in such a manner as to be able to compensate at least in part the deformations of the continuous strip (2) induced by the cutting operation in the vicinity of the first and second edges (2A, 2B), at least three successive phase:

- a first phase (Ph1) termed the "leading phase" in which the synchronization law (L40) applies, when the first blade (21) reaches and crosses the first edge (2A) forming a leading edge, a first synchronization ratio termed the "leading synchronization ratio" (K1) that is strictly greater than the nominal synchronization ratio (K2),
- then a second phase (Ph2) termed the "nominal cutting phase" in which the synchronization law reduces the synchronization ratio to apply a second synchronization ratio (K2) equal to the nominal synchronization ratio corresponding to the nominal cutting angle (A_cut2) aimed at,
- then a third phase (Ph3) termed the "trailing phase", in which the synchronization law further reduces the synchronization ratio in such a manner as, on approaching the second edge (2B) and when crossing said second edge forming a trailing edge, to apply a third synchronization ratio (K3) termed the "trailing synchronization ratio" that is strictly less than the nominal synchronization ratio (K2).

5. Cutting system according to any one of the preceding claims **characterized in that** the first blade (21) covers an axial distance along the first rotation axis (Z20) of the first cutting roller (20) termed the "usable blade width" (W21) that is strictly greater than the overall width (W2) of the continuous strip (2) so as to provide on the one hand, projecting from the first edge (2A) along said first rotation axis, an upstream lateral clearance (WA) that enables the variable synchronizer (40) to bring the rotation speed (R20) of the first cutting roller to a required value, corresponding to the required synchronization ratio (K, K1), before the first blade (21) comes into contact with the continuous strip (2) at the level of the first edge (2A) of said continuous strip and on the other hand, projecting from the second edge (2B) along said first rotation axis (Z20), a downstream lateral clearance (WB) enabling the first rotation (R20) to continue beyond the second edge (2B) and therefore the routing of the first blade (21) that corresponds to the cutting action exerted by said first blade to continue beyond the second edge (2B) so that the synchronization ratio (K) remains controllable at least up to the time at which a strip (5) is detached completely from the continuous strip (2).

6. Cutting system according to any one of the preceding claims **characterized in that** at least one of the first and second cutting roller (20, 30), preferably the second cutting roller (30), comprises a guide shoulder (33) that is arranged to form a lateral stop against the first edge (2A) or the second edge (2B).

7. Cutting system according to any one of the preceding claims **characterized in that** it is intended to cut continuous strips comprising reinforcing cords (4) that are continuous and arranged parallel to the first and second edges (2A, 2B) with a predetermined pitch (d4) and **in that** at least one of the first and second cutting roller(s) (20, 30), preferably the second cutting roller (30), comprises a cylindrical bearing surface (36) centred on the rotation axis (Z30) of said cutting roller on which the continuous strip (2) comes to bear, and that includes a series of annular grooves (37) oriented in the longitudinal direction (L2) of the continuous strip (2), and the axial distribution pitch (d37) of which preferably corresponds to the pitch (d4) of the reinforcing cords (4), so that said grooves (37) contribute to lateral retention of the continuous strip (2) during the cutting operation.

8. Cutting system according to any one of the preceding claims **characterized in that** it is intended to cut continuous strips (2) comprising continuous reinforcing cords (4) arranged parallel to the first and second edges (2A, 2B) with a predetermined pitch (d4) and **in that** the first blade (21) comprises striations (27) oriented in the longitudinal direction (L2) of the continuous strip, and preferably spaced at an axial distribution pitch (d27) that corresponds to the pitch (d4) of the reinforcing cords, so that said striations (27) contribute to lateral retention of the continuous strip (2) during the cutting operation.

9. Cutting system according to any one of the preceding claims **characterized in that** the second cutting roller (30) features a helical groove (31) of conjugate shape to the first blade (21).

10. Cutting system according to any one of the preceding claims **characterized in that** the first blade (21) covers less than one helical pitch around the first cutting roller (20) in such a manner that said first cutting roller (20) features, in azimuth around the first rotation axis, on the one hand a cutting angular sector (S20_cut) occupied by the first blade (21) and on the other hand a free passage angular sector (S20_free) where there is no blade and that is arranged to allow the continuous strip (2) to move between the first and second cutting rollers (20, 30) without subjecting said continuous strip (2) to any cutting action.

11. Cutting system according to Claim 10 **characterized in that** the free passage angular sector (S20_free) comprises a flat (28) that places the surface of the first cutting roller (20) set back from the strip path (T2).

12. Installation (100) for producing reinforcement plies for tyres, in particular for pneumatic tyres, said installation comprising on the one hand a strip preparation device (101) that produces strips (5) by cutting said strips by means of a cutting system (1) according to any one of Claims 1 to 11 in a continuous strip (2) termed the "zero degree belt" that is formed of at least one layer of rubber layer (3) reinforced by a plurality of reinforcing cords (4) that are continuous, preferably made of metal, that extend parallel to one another in the longitudinal direction (L2) of the continuous strip (2) and on the other hand an applicator head (102) arranged to come to press said strips (5) successively onto an assembly support (103), such as a conveyor, a cylindrical drum or a toroidal core, and to abut said strips (5) successively one to the others by their edges (2A, 2B) so as to constitute a reinforcement ply (6).

13. Installation according to Claim 12 **characterized in that** the applicator head (102) comprises a presser member (104) such as a presser roller arranged to come to press the strip (5) against the assembly support (103) and **in that** the cutting system (1) is arranged to cut the strip (5) on the fly while said strip is already engaged on the assembly support (103) and being applied onto said assembly support (103) at a non-zero speed that corresponds to the forward speed (V_fwd) at which the continuous strip (2) travels the strip path (T2) between the first and second cutting rollers (20, 30).

14. Method of producing strips during which successive strips (5) are produced by cutting a strip termed the "continuous strip" (2) that extends lengthwise in a direction termed the "longitudinal direction" (L2) and widthwise (W2) between a first edge (2A) and a second edge (2B),

- by feeding said continuous strip (2) at a particular speed termed the "forward speed" (V_fwd) that is oriented in the longitudinal direction of said continuous strip along a strip path (T2) that passes between a first cutting roller (20) provided with a first helical blade (21), and a contrarotating second cutting roller (30),
- by driving said first cutting roller (20) in a first movement in rotation (R20) at a chosen rotation speed around a first rotation axis (Z20) oriented transversely to the strip path (T2), preferably perpendicularly to said strip path (T2), so as to travel and to cut all the width (W2) of said continuous strip (2) from the first edge (2A) to the second edge (2B), and
- by controlling by means of a variable synchronizer (40) the forward speed (V_fwd) conferred on the continuous strip and the rotation speed (R20) of the first cutting roller (20) in such a manner as to be able to select and to modify the ratio, termed the "synchronization ratio" (K), between the rotation speed (R20) of the first cutting roller (20) and the forward speed (V_fwd) of the continuous strip (2) in such a manner as to be able to adjust the angle termed the "cutting angle" (A cut) at which the cutting of the continuous strip (2) is oriented relative to the longitudinal direction (L2) of said continuous strip.

15. Method according to Claim 14 **characterized in that** the strip (5) is cut along an actual cutting line (T_cut) that is rectilinear and oriented at a predetermined cutting angle termed the "nominal cutting angle" (A_cut2) relative to the longitudinal direction (L2) of the continuous strip to which geometrically corresponds a synchronization ratio termed the "nominal synchronization ratio" (K2), by successively applying: a first synchronization ratio termed the "leading synchronization ratio" (K1) the absolute value of which is strictly greater than the absolute value of the nominal synchronization ratio (K2) to engage and to cross the first edge (2A), then a second synchronization ratio (K2) lower than the first synchronization ratio (K1) and equal to the nominal synchronization ratio (K2), then, on approaching the second edge (2B) and when crossing said second edge, a third synchronization ratio termed the "trailing synchronization ratio" (K3) the absolute value of which is strictly less than the absolute value of the nominal synchronization ratio (K2).

## FIG. 1

## FIG. 2

## FIG. 3

FIG. 4       FIG. 5       FIG. 6

FIG. 7

FIG. 8

FIG. 9

$$\frac{V\_rel}{V\_fwd} = \tan (A\_cut)$$

FIG. 10

FIG. 11

FIG. 12

FIG. 13

FIG. 14

FIG. 15

FIG. 16

FIG. 19A

FIG. 19B

FIG. 17

FIG. 18

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3183751 A